(19) Europäisches Patentamt
European Patent Office
Office européen des brevets

(11) **EP 3 754 557 A1**

(12) **EUROPEAN PATENT APPLICATION**

(43) Date of publication:
**23.12.2020 Bulletin 2020/52**

(51) Int Cl.:
*G06N 3/04* *(2006.01)*    *G06N 3/08* *(2006.01)*

(21) Application number: **19181201.5**

(22) Date of filing: **19.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Mangold, Philipp**
**73733 Esslingen-Neckarhalde (DE)**

Remarks:
Amended claims in accordance with Rule 137(2) EPC.

(54) **ROBUSTNESS INDICATOR UNIT, CERTIFICATE DETERMINATION UNIT, TRAINING UNIT, CONTROL UNIT AND COMPUTER-IMPLEMENTED METHOD TO DETERMINE A ROBUSTNESS INDICATOR**

(57)    A robustness indicator unit (2000) and a computer-implemented method for determining a robustness indicator (RI) for a trained artificial neural network (100) are provided. The robustness indicator (RI) indicates a robustness of the trained artificial neural network (100) against adversarial attacks.

Fig. 20

EP 3 754 557 A1

**Description**

State of the Art

The present invention relates to a robustness indicator unit, a certificate determination unit, a training unit, a control unit and a computer-implemented method to determine a robustness indicator.

"Provable Defenses against Adversarial Examples via the Convex Outer Adversarial Polytope" by Wong et al. discloses that it is possible to determine whether an Artificial Neural Network is robust against each perturbation of the input value of the Artificial Neural Network. In order to determine whether the Artificial Neural Network does not change its classification for all input values within a ball an optimization problem has to be solved. If the solution of the optimization problem is positive, all input values within $B(x)$ are correctly classified by the Artificial Neural Network. This means that no perturbation fools the Artificial Neural Network such that the Artificial Neural Network classifies the modified input wrongly as target class instead of the (labeled) true class of the input value.

Exemplarily, the input to the Artificial Neural Network is an image and the output of the Artificial Neural Network is a classification vector with 4 classes (e.g. y= [0 0 0 1] -> image belongs to the fourth class). Wong et al. defined the vector c as a vector containing the true classification of the input (indicated by a 1) and the target classification (indicated by a -1), which the Artificial Neural Network could determine wrongly when the input is modified by a perturbation. For this example, c has these predefined entries: c =[0 0 -1 1]. If the Artificial Neural Network determines the target classification instead of the true classification, the Artificial Neural Network has been fooled by the perturbation of the input value and is not robust against modifications of the reviewed input value. The solution of the optimization problem is in this case negative.

It is possible to let a person disappear in an image due to an adversarial modification of the image that is not visible for the human eye, as shown by Metzen, et al. "Universal adversarial perturbations against semantic image segmentation." in: The IEEE International Conference on Computer Vision (ICCV) 2017.

Therefore, neural networks are highly vulnerable to adversarial attacks. A possible defense is to retrain neural network with additionally generated adversarial modifications of the respective training images. This is disadvantageous as it is time-consuming and costly to generate modifications of the image that could fool the neural network and there is a high probability that modifications remain which are not covered by crafting adversarial examples, but which can still fool the neural network.

Disclosure of the Invention

The problems of the prior art are solved by a robustness indicator unit according to claim 1, a certificate determination unit according to a dependent claim, a training unit according to a dependent claim, a control unit according to a dependent claim and a computer-implemented method to determine a robustness indicator according to an independent claim. Further examples and advantages are given in the examples depicted in the figures and explained in the following description.

According to a first aspect a robustness indicator unit for determining a robustness indicator for a trained artificial neural network is provided. The robustness indicator indicates a robustness of the trained artificial neural network against adversarial attacks. The robustness indicator unit comprises: a first provisioning unit being configured to determine or provide first input data for the trained artificial neural network; a second provisioning unit being configured to determine or provide perturbation data for the first input data; a first determination unit being configured to determine upper and lower bounds of activation functions of the trained artificial neural network by propagating input data, which is dependent on the first input data and the perturbation data, through the trained artificial neural network; a second determination unit being configured to determine a dual artificial neural network in dependence on the trained artificial neural network, wherein, in the dual artificial neural network, an output layer originating from the trained artificial neural network is re-configured as an input layer, wherein, in the dual artificial network, the input layer originating from the trained artificial neural network is re-configured as an output layer, wherein activation functions of the dual artificial network are determined in dependence on the determined upper and lower bounds; a third provisioning unit being configured to determine or provide second input data for the dual artificial neural network, in particular in dependence on one predetermined class of the output layer of the trained artificial neural network, wherein the second input data is a dense tensor; a second determination unit being configured to determine output data of the dual artificial network by propagating the second input data through the dual artificial neural network; and a third determination unit being configured to determine the robustness indicator for the trained artificial neural network in dependence on the first input data, in dependence on the perturbation data, and in dependence on the output data of the dual artificial neural network.

Therewith, it is possible to determine only by one time, whether the trained artificial neural network classifies all modified input values into the correct class. So, determining the robustness indicator for one class only is sufficient. As the second input data does not comprise zeros, every 'output class' of the trained neural network is taken into account.

It is not necessary to determine a robustness indicator for each class differing to the true classification. This speeds up the determination to guarantee that there does not exist a modification of the input in the form of perturbation data that is not correctly classified. A regression with dozens of different classes is not necessary. Furthermore, this allows to use the robustness indicator in real-time systems, for example for analyzing video frames.

Especially, autonomous driving being be based on cameras, which sense the environment of an autonomous car, benefit. Intelligent image processing comprising the trained neural network processes images of such a camera in order to control the autonomous car dependent on the sensed images. In particular, with this approach, it is possible to rapidly determine robustness of the neural network against possible adversarial perturbations of input images.

Moreover, it is possible to determine quickly for a plurality of given perturbations, which one of the perturbations still guarantees the robustness of the trained artificial neural network.

According to an example, the second input data for the dual artificial neural network comprises only non-zero values, namely a plurality of negative values, in particular -1's, and only one single positive value, in particular a 1, for the true classification.

According to an aspect, a certificate determination unit for determining a robustness certificate is provided, the certificate determination unit comprising the robustness indicator unit according to the former aspect, wherein the certificate determination unit further comprises: a determination unit being configured to determine the robustness certificate if the robustness indicator indicates the robustness of the trained artificial neural network against adversarial attacks.

Advantageously, certificate generation benefits from the accelerated determination of the robustness indicator.

According to another aspect, a training unit to train an artificial neural network is provided, wherein the training unit comprises: a provisioning unit being configured to provide training data for the artificial neural network; a training unit being configured to train the artificial neural network in training iterations; and the robustness indicator unit according to claim 1, which is configured to stop the training via the training unit after one of the training iterations if the robustness indicator indicates the robustness of the trained artificial neural network against adversarial attacks.

As training is traditionally a time-expensive issue, the proposed robustness indicator prevents overtraining the artificial neural network by determining a state of training, at which sufficient robustness is achieved.

According to a further aspect, a control unit to operate a sensor-actuator system is provided, wherein the sensor-actuator system comprises at least one sensor and at least one actuator. The control unit comprises: a hardware security unit being configured to store a first robustness certificate and run-time parameters of the trained artificial neural network; the certificate determination unit according to a previous aspect being configured to determine a second robustness certificate in dependence on the run-time parameters of the trained artificial neural network; and an execution unit being configured to determine input data for the trained neural network in dependence on at least one sensor reading of the at least one sensor, to compare the first and second robustness certificates with each other, and to execute the trained neural network by propagating the input data for the trained neural network through the trained artificial neural network and/or to operate the at least one actuator based on an output of the trained artificial neural network only if the first and second robustness certificates match.

Advantageously, the control unit enables safe real-time operation of a sensor-actuator system with a certification mechanism for the artificial neural network.

According to a further aspect, a computer-implemented method for determining a robustness indicator for a trained artificial neural network is provided, the robustness indicator indicating a robustness of the trained artificial neural network against adversarial attacks, the method comprising: determine or provide first input data for the trained artificial neural network; determine or provide perturbation data for the first input data; determine upper and lower bounds of activation functions of the trained artificial neural network by propagating input data, which is dependent on the first input data and the perturbation data, through the trained artificial neural network; determine a dual artificial neural network in dependence on the trained artificial neural network, wherein, in the dual artificial neural network, an output layer originating from the trained artificial neural network is re-configured as an input layer, wherein, in the dual artificial network, the input layer originating from the trained artificial neural network is reconfigured as an output layer, wherein activation functions of the dual artificial network are determined in dependence on the determined upper and lower bounds; determine or provide second input data for the dual artificial neural network, in particular in dependence on one predetermined class of the output layer of the trained artificial neural network, wherein the second input data is a dense tensor; determine output data of the dual artificial neural network by propagating the second input data through the dual artificial neural network; and determine the robustness indicator for the trained artificial neural network in dependence on the first input data, in dependence on the perturbation data, and in dependence on the output data of the dual artificial neural network.

According to an example, the second input data for the dual artificial neural network comprises only non-zero values, namely a plurality of negative values, in particular -1's, and one single positive value, in particular a 1, for the true classification.

According to an example, the method further comprises: determine the robustness certificate if the robustness indicator indicates the robustness of the trained artificial neural network against adversarial attacks.

According to an example, the method comprises: provide training data for the artificial neural network; train the artificial neural network in training iterations; and stop the training after one of the training iterations if the robustness indicator indicates the robustness of the trained artificial neural network against adversarial attacks.

According to a further aspect, a method to operate a sensor-actuator system is provided, wherein the sensor-actuator system comprises at least one sensor and at least one actuator, the method comprising: store a first robustness certificate and run-time parameters of the trained artificial neural network; determine a second robustness certificate in dependence on the run-time parameters of the trained artificial neural network; determine input data for the trained neural network in dependence on at least one sensor reading of the at least one sensor; compare the first and second robustness certificates with each other; and execute the trained neural network by propagating the input data for the trained neural network through the trained artificial neural network and/or to operate the at least one actuator based on an output of the trained artificial neural network only if the first and second robustness certificates match.

Short description of the figures

Fig. 1   shows a schematic depiction of a neural network with an input value and possible perturbations of the input value as well as an output value with an adversarial polytope;

Fig. 2   shows two schematic depictions of the output value each with the adversarial polytope and a decision boundary;

Fig. 3   shows schematically an embodiment of a flow chart for a method for determining an objective function;

Fig. 4   shows schematically an embodiment of a flow chart of a method for determining upper and lower bounds of activation functions and shows a schematic depiction of the neural network with a skip connection;

Fig. 5   shows a schematic embodiment of a flow chart of a method for propagating an input value through a dual neural network and shows further a schematic depiction of the dual neural network;

Fig. 6   shows schematically an embodiment of a flow chart of a method for training the neural network by the objective function;

Fig. 7   shows a schematic embodiment of a flow chart of a method for determining a random Cauchy projection;

Fig. 8   shows schematically an embodiment of a flow chart of a method for detecting adversarial examples during interference of the neural network;

Fig. 9   shows a schematic embodiment of a flow chart of a method for finding a maximal allowable perturbation of the input value(s);

Fig. 10   shows a schematic embodiment of a flow chart of a method for determining tighter bounds of the activation function;

Fig. 11   shows schematically an embodiment of a flow chart of a method for operating an at least partly autonomous robot with the neural network;

Fig. 12   an actuator control system having an automated learning system controlling an actuator;

Fig. 13   the actuator control system controlling a partially autonomous robot;

Fig. 14   the actuator control system controlling a manufacturing machine;

Fig. 15   the actuator control system controlling an automated personal assistant;

Fig. 16   the actuator control system controlling an access control system;

Fig. 17   the actuator control system controlling a surveillance system;

Fig. 18   the actuator control system controlling an, in particular medical, imaging system;

Fig. 19   a training system configured to train a robust neural network;

Fig. 20   depicts a schematic block diagram for determining a robustness indicator;

Fig. 21   depicts a schematic flow chart;

Fig. 22   depicts a schematic block diagram for determining a robustness certificate;

Fig. 23   depicts a schematic block diagram of a control unit; and

Fig. 24   depicts a schematic block diagram for training an artificial neural network.

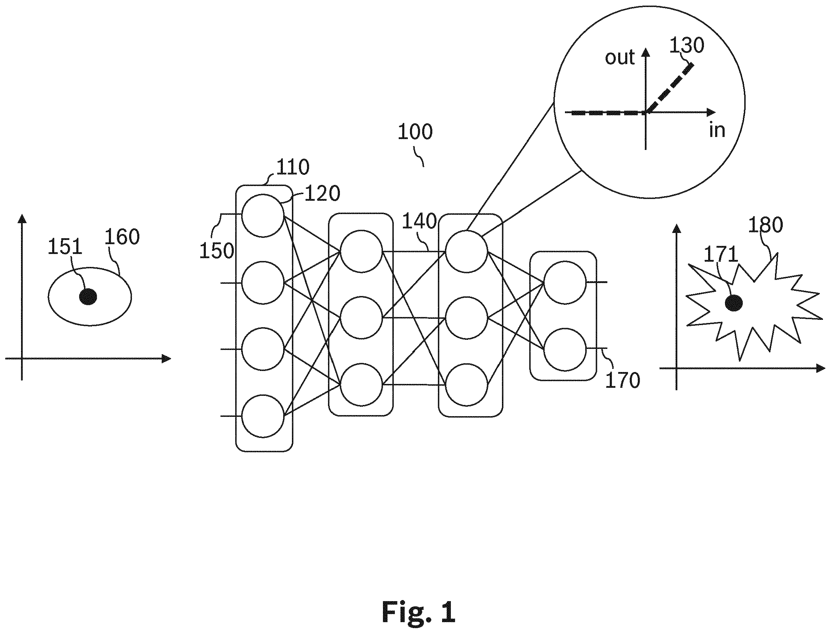

Figure 1 shows a schematic depiction of an embodiment of an automated learning system as a neural network 100. The neural network 100 comprises several layers 110. Each layer 110 comprises neurons 120, which have an input 150 and an output. The input value received at the input 150 of the neuron 120 is called activation of the neuron 120.

The neurons 120 determine dependent on their activation an output value. Further, the neurons comprise an activation function 130 that is utilized to determine the output value dependent on the activation of the respective neuron 120. The depicted activation function 130 in figure 1 is a rectified linear function (so-called ReLu).

The layers of the neural network 100 are (directly) connected with each other by connections 140. The connections 140 connect an output of the neuron of a first connected layer with an input of the neuron corresponding to a second connected layer and provide the output value as an input value to the connected neuron of the second connected layer. Preferably, the connections 140 multiply the output value by parameter and provide the multiplied output value as input value. One of the layers 110 is an input layer of the neural network 100. The input layer receives as input value an input value 151 of the neural network 100. The neural network 100 comprises further an output layer. The provided output value at output 170 of the output layer is an output value 171 of the neural network 100.

As depicted in figure 1, the layers 110 can be arranged in a row, wherein the layers are connected with a subsequent layer, respectively. The neural network 100 may comprise a batch normalization layer and/or a max-pooling layer and/or a linear-pooling layer.

The input value 151 of the neural network 100 can be a scalar, vector, matrix or tensor. For example, the input value can be a picture or audio signal or a sensor value. The output value 171 can be vector in this embodiment, which characterizes for example a classification of the input value into one of several classes. In this embodiment, each output 170 of the output layer characterizes one of the classes. The activations can be either a scalar, vector, matrix or a tensor dependent on the dimensions of the corresponding layers 110.

Considering $k$ layers, the neural network $f_\theta$ is given by the equations:

$$z_i = \sum_{j=1}^{i-1} f_{i,j}(z_j), \qquad for\ i = 2, \dots, k \qquad (1)$$

with the input value of the neural network $z_1 = x$ and $f_\theta(x) = z_k$ and a funtion $f_{i,j}$ from layer $j$ to layer $i$ and parametrization $\theta$.

As shown in figure 1, the input value 151 of the neural network 100 can vary within a given scope (input perturbation 160). For example, due to measurement noise, the input value can vary, which can be characterized by a perturbation value $\varepsilon$. The input value can also vary due to an adversarial modification of the input value. The modification can be locally limited, e.g. only a semantic region of an input image is modified, which is also characterized by the perturbation value $\varepsilon$. The perturbation value $\varepsilon$ can be a maximal value of the modification or a mean of the modification.

The maximum perturbation is depicted schematically in figure 1 by the bounded input perturbation 160. The bounded input perturbation 160 can be mathematically described as:

$$B(x) = \{x + \Delta : \left|\left|\Delta\right|\right|_p \le \epsilon\} \qquad (2)$$

where $B(x)$ represents an input constraint for the maximum allowable input perturbation 160 and $(\|\cdot\Delta\|_p)$ characterizes a $p$-norm-bounded modification $\Delta$ of the input value $x$. The modification $\Delta$ can be for example noise or an adversarial perturbation of the input value $x$, wherein the modification $\Delta$ describes all possible modifications due to e.g. noise or adversarial examples of the input value $x$. The perturbation $\varepsilon$ can be seen as an upper bound of the modification $\Delta$ of the input value ($x$).

In order to decide whether there exists a modification $\Delta$ of the input value $x$ within $B(x)$ which can fool the neural network 100, following optimization problem has to be solved:

$$\min_{z_k} c^T z_k \qquad (3)$$

$$subject\ to\ z_i = \sum_{j=1}^{i-1} f_{i,j}(z_j),\ \ for\ i = 2, \dots, k$$

$$z_1 \in B(x)$$

where the input value x has assigned a given class $y^* = y^{true}$ and a target class $y^{targ}$ and c = $e_{y^*}$ - $e_{y_{targ}}$. The target class $y^{targ}$ can be arbitrarily chosen and is a class different from the given class $y^*$. The result of the equation (3) is a scalar describing the most adversarial input value ($x$) within $B(x)$, that is classified by the neural network as the target class $y^{targ}$, although the input value x belongs to the given class $y^{true}$. If this scalar is positive then there does not exist an adversarial example of the input value x, which fools the neural network due to a misclassification of the adversarial example. If the scalar is positive, then there exists a guaranteed robustness against all modifications within $B(x)$.

The optimization problem according to equation (3) can be solved for all different target classes different from the given class $y^{true}$. If the result of the optimization problem according to equation (3) is positive for all target classes different from the given class, then there does not exist a norm bounded adversarial modification $\Delta$ of the input value x that could be misclassified by the neural network 100. The important point is that, if the minimum of equation (3) is positive, it is guaranteed that no adversarial example exists within $B(x)$.

Because it would be very inefficient to solve the optimization problem according to equation (3), the problem can be bounded, in particular by a dual optimization problem. Note that a solution of the dual problem is a feasible dual solution and provides a guaranteed lower bound on the solution of the primal optimization problem as given in equation (3).

The dual problem can be built by adding the constraints into the primal optimization problem, e.g. with Lagrangian multiplies.

For the case, when skip connection are used, the constraints of the equation (3) are dependent on each other. Therefore, an indicator function is used to determine the dual optimization problem. The indicator function can be given as:

$$\chi_i(z_{1:i}) = \begin{cases} 0 \,, if \; z_i = \sum_{j=1}^{i-1} f_{i,j}(z_j) \\ \infty \qquad , otherwise \end{cases} \tag{4}$$

for $i = 2, ..., k$.

A 'pseudo'-conjugate function, related to a Fenchel conjugate function, of the indicator function is given by:

$$\chi_i^*(z_{1:i}) = \max_{z_i} -v_i^T z_i + \sum_{j=i+1}^{k} v_j^T f_{i,j}(z_i) \tag{5}$$

for $i = 1,.., k - 1$. Note that the conjungate function of equation (5) is not an exact conjugate function of equation (4), therefore $\chi_i^*$ is called a 'pseudo'-conjugate function.

The 'pseudo'-conjugate of the indicator function can be upper bounded by:

$$\chi_i^*(z_{1:i}) \le h_i(v_{i:k}) \tag{6}$$

$$subject \; to \; v_i = \sum_{j=i+1}^{k} g_{i,j}(v_j)$$

With previous equations, the optimization problem according to equation (3) can be rewritten as a lower bound of equation (3). This lower bound is expressed by:

$$\max_{v} \left( -\sum_{i=2}^{k} h_i(v_{i:k}) \; - \hat{v}_1^T x \; - \epsilon \lVert \hat{v}_1 \rVert_q \right) \tag{7}$$

$$subject \; to \; v_k = -c$$

$$v_i = \sum_{j=i}^{k-1} g_{i,j}(v_{j+1}), \quad for \; i = 1, ..., k-1$$

where $\lVert \; \rVert_q$ is the dual norm to the $p$-norm in equation (2).

The max-term can be written as an objective function $J$:

$$J(x, v_{1:k}) = -\sum_{i=2}^{k} h_i(v_{i:k}) \; - v_1^T x \; - \epsilon \lVert v_1 \rVert_* \tag{8}$$

The objective function $J$ can be efficiently determined by using a dual neural network that is given by the following equation (9):

$$v_k = -c \tag{9}$$

$$v_i = \sum_{j=i}^{k-1} g_{i,j} (v_{j+1}) \, , for \, i = 1, \dots, k-1$$

where $g_{i,j}$ is the dual layer, characterizing a dual transformation by a dual activation function of said layer.

In the following, two different dual layers are shown exemplarily. The dual layer for a linear layer ($z_{i+1} = W_i z_i + b_i$) can be expressed as:

$$X_i^*(z_{1:i}) = v_{i+1}^T b_i \tag{10}$$

$$subject \ to \ v_i = W_i^T v_{i+1}$$

The dual layer for the layer with the ReLu activation function ($z_{i+1} = max\{z_i, 0\}$) is given as:

$$X_i^*(z_{1:i}) \leq - \sum_{j \in I_i} l_{i,j} \times max[v_{i,j}, 0] \tag{11}$$

$$subject \ to \ v_i = D_i v_{i+1}$$

where $D_i$ is a diagonal matrix:

$$(D_i)_{jj} = \begin{cases} 0 & j \in I_i^- \\ 1 & j \in I_i^+ \\ \dfrac{u_{i,j}}{u_{i,j} - l_{i,j}} & j \in I_i \end{cases} \tag{12}$$

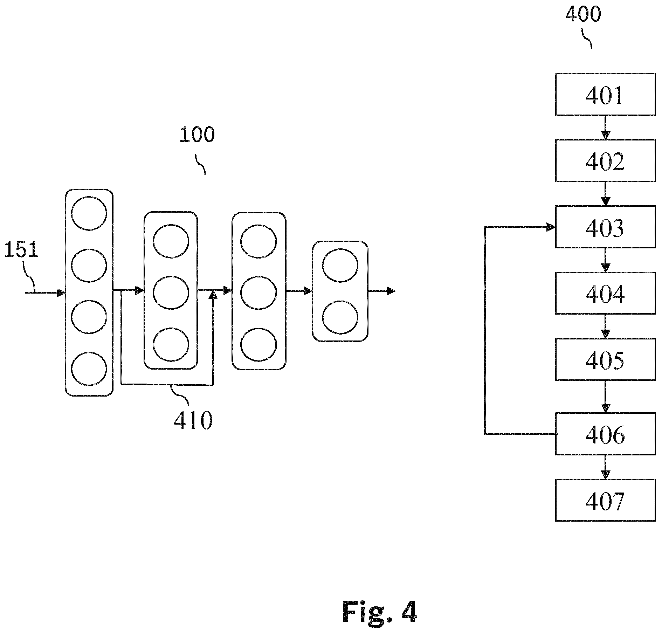

and $I_i^-$, $I_i^+$, $I_i$ denotes a set of the negative, positive and spanning zero activations, respectively. These sets of activations are dependent on lower and upper bounds ($u$, $l$) of the corresponding activations and can be seen as auxiliary constraints. If the upper bound ($u$) of the activation is smaller than zero, the activation correspond to the set of activations $I_i^-$ with negative activations. If the lower bound ($l$) is positive, then the activation corresponds to the set of activations $I_i^+$ with positive activations. If the lower and upper bound span the zero point, then the activation corresponds to the set $I_i$. The method to determine the lower and upper bounds is shown in figure 4.

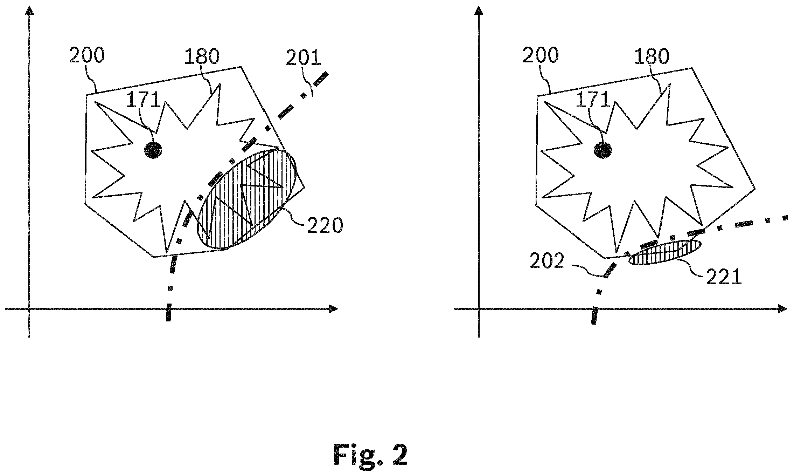

As already discussed, if the objective function is positive, then there does not exist modifications of the input value $x$ that fools the neural network 100. However, if the objective function is negative, it is not possible to guarantee whether the modification of the input value $x$ changes the classification of input value to the target classification. As in figure 2 schematically shown, the output value 171 of the neural network 100 is bonded by an output adversarial polytope 180. The output adversarial polytope 180 is a non-convex set due to the non-linear activation functions, such as the ReLu activation function, of the neural network 100. For simplification, the non-linear activation functions can be approximated, which results in an approximation of the output adversarial polytope 180.

The approximation of the ReLu activation function can be done by bounding the ReLu with a convex hull. The convex hull is described by three linear equations, one for the negative input values, one for the positive input values and a third linear equation, which closes the spanned area of the two linear equations to a convex hull.

The approximation of the output adversarial polytope is shown in figure 2 by the bounded convex polytope 200.

Furthermore, figure 2 shows a decision boundary 201, which crosses the output adversarial polytope 180 and the bounded convex polytope 200. This implies that the output value 171 of the neural network 100 can be misclassified if it is within the area 220 of the output adversarial polytope 180. If the modification of the input value results in a shift of the output value of the neural network 100 into the area 220, this would result in a false classification of the input value. For this case, the objective function would be negative since a shift of the output value 171 could result in another classification, when crossing the decision boundary 201. For this case, there does not exist a robustness against misclassify modifications of the input value.

If a second decision boundary 202 crosses only the bounded convex polytope 200, but not the output adversarial polytope 180, then the objective function $J$ is also negative although any modification of the input value x would not result in false classification since all possible output values lie within the output adversarial polytope 180 which is not divided by the second decision boundary 202. For this case, there would be a robustness against misclassify modifications of the input value. However due to the approximation of the output adversarial polytope 180, the objective function ($J$) is not accurate.

Therefore, if the objective function J is negative, it is not possible to decide whether modification of the input could fool the neural network 100. Only for positive objective functions, a guaranteed decision can be made that the modification of the input value does not fool the neural network 100.

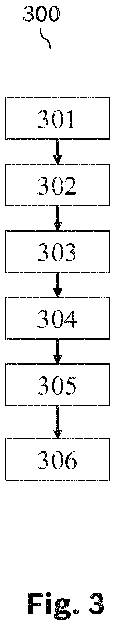

Figure 3 shows a schematic flow chart 300 of a method for determining the objective function J of equation (8).

The method starts with step 301. In this step 301, the input value x and the true classification $y^{true}$ of the input value x and the target classification $y^{targ}$ and a given perturbation $\varepsilon$ are provided.

Then, in the step 302, the variable $c$ according to equation (3) is determined.

In the subsequent step 303, the input value $x$ is propagated through the neural network 100 and the upper and lower bounds ($l,u$) of the activations of the neurons (or the activation functions) are determined. The method for determine these bounds ($l,u$) is shown in figure 4.

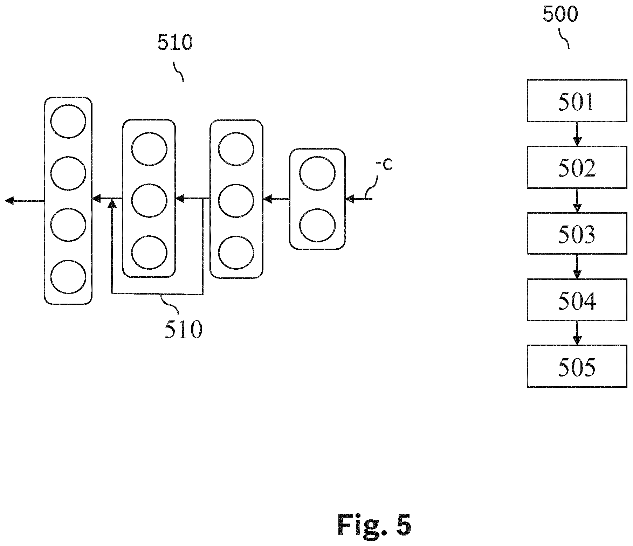

After finishing step 303, step 304 is carried out. In this step, the dual neural network is built according to the equation (9). Afterwards, step 305 is carried out. In this step, the variable $c$ is propagated through the dual neural network according to equation (9). A more detailed description of the steps 304 and 305 is given in figure 5.

In step 306, the objective function $J$ according to equation (8) is determined dependent on the input value $x$ and dependent on the output value $v_1$ of the dual neural network and the given perturbation $\varepsilon$.

Figure 4 shows the neural network 100 with a skip connection 410. In this embodiment of the neural network 100, all neurons may have a ReLu activation function. Further, figure 4 shows an embodiment of a flow chart 400 of a method for determining the upper and lower bounds of the input value of the layers of the neural network 100 with a skip connection 410, in particular a method for determining the upper and lower bounds of the activations of the neurons with a ReLu activation function.

The method for determining the upper and lower bounds of the input value of the layer starts with step 401. In this step, the input value $x$ and the perturbation $\varepsilon$ are provided and diverse variables are initialized according to following equation:

$$\hat{v}_1 := W_1^T \qquad (13)$$

$$\gamma_1 = b_1^T$$

$$l_2 = x^T W_1^T + b_1^T - \epsilon \left\| W_1^T \right\|_{1,:}$$

$$u_2 = x^T W_1^T + b_1^T + \epsilon \left\| W_1^T \right\|_{1,:}$$

wherein $\| \|_{1,:}$ denotes the matrix $l_1$ norm of all columns, for this example. Other norms are also conceivable.

In step 402, a loop is started over the layers of the neuronal network. The loop is initialized by $i = 2$ and repeated until $i$ equals $k$ - 1. In the first step 403 of the loop, the activations sets $I_i^-$, $I_i^+$, $I_i$ are determined dependent on the values of the upper and lower bounds of the layer (i).

Then, in step 404 new terms are initialized according to the equations:

$$v_{i,I_i} := (D_i)_{I_i} W_i^T \qquad (14)$$

$$\gamma_i = b_i^T$$

Afterwards (step 405), the existing terms are propagated according to equation:

$$v_{j,I_i} := v_{i,I_i} (D_i)_{I_i} W_i^T, j = 2, \ldots, i-1 \qquad (15)$$

$$\gamma_i := \gamma_i D_i W_i^T, j = 1, \ldots, i-1$$

$$\hat{v}_1 := \hat{v}_1 D_i W_i^T$$

In step 406, the bounds are computed as:

$$\psi_i := x^T \hat{v}_1 + \sum_{j=1}^{i} \gamma_j \qquad (16)$$

$$l_{i+1} = \psi_i - \epsilon \left\| \hat{v}_1 \right\|_{1,:} + \sum_{j=2}^{i} \sum_{i' \in I_i} l_{i,j} \max[-v_{j,i'}, 0]$$

$$u_{i+1} = \psi_i + \epsilon \left\| \hat{v}_1 \right\|_{1,:} - \sum_{j=2}^{i} \sum_{i' \in I_i} l_{i,j} \max[v_{j,i'}, 0]$$

Additionally, the loop index $i$ is increased in step 406. If $i$ equals $k$ - 1, then step 407 is carried out. In this step, the upper and lower bounds $l_{1:k}$, $u_{1:k}$ are returned. Otherwise ($i < k$ - 1), steps 403 to 406 are repeated. Note that if not each neuron has a non-linear activation function, it is not required to determine the bounds for each neuron.

Note that if the neural network comprise other non-linear activation functions, equation (16) can be modified with respect to equation (6) by replacing each sum: $\pm \sum_{j=2}^{i} \sum_{i' \in I_i} \pm$ by $\pm \sum_{j=1}^{i} h_j(\pm v_j, \ldots, \pm v_i)$, respectively. In addition, the dual transformations $g_i$ have to be applied in step 404 and 405.

Figure 5 shows the dual neural network 510 with a dual skip connection 510. In this embodiment of the dual neural network 510, the dual neural network 510 is created based on the neural network 100 shown in figure 4. Further, figure 5 shows an embodiment of a flow chart 500 of a method for building the dual neural network 510 and propagating an input value - $c$ through the dual neural network 510 according to equation (9).

This method starts with step 501 by creating the dual neural network 510. Exemplarily, the architecture of the neural network 100 is copied and the input layer and output layer of the neural network 100 are reconfigured as output layer and input layer of the dual neural network 510, respectively. This means that when the input value - $c$ is propagated through the dual network 510, relative to the propagation of the input of the neural network 100, the input of the dual neural network 510 is propagated backwards. Note that when the dual network in figure 5 is rotated by 180 degree, then the input value of the dual neural network propagates forward through the dual neural network relative to the neural network 100.

In step 502, the activation functions of each layer are replaced by a respective dual activation function. The dual activation function can be determined according to equations (6) or equations (10) to (12).

In subsequent step 503, the input of the dual neural network 510 receives as input the variable c or according to equation (9) as input value is utilized - $c$ to determine the objective function J as solution of the dual problem.

Thereafter (step 504), the input of the dual neural network 510 is propagated layer-wise through the dual network 500. After the output layer has determined its output value in step 504, in the succeeding step 506, this output value is returned as output value of the dual neural network 510.

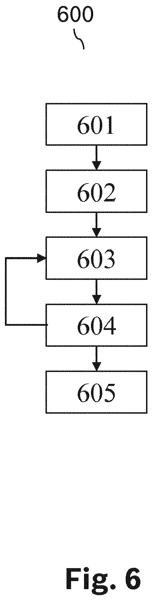

Figure 6 shows an embodiment of a flow chart 600 of a method to train the neural network 100 to be guaranteed robust against adversarial perturbations of the input values of the neural network 100.

This training method starts with step 601. Here, training data comprise N training input values $x$ and $N$ training output values $y^{true}$, which are assigned to the trainings input values $x$, respectively. The output values $y^{true}$ can be true classifications of the respective input values $x$. The perturbation value $\varepsilon$ is also given in step 601. Note that the training data comprising N pairs of input values and output values is called a batch.

If more than one batch is available, this method can be repeated for each batch. Additional or alternative, the method can be repeated for the same batch several times until a given criterion is met. Note that this training method can be also used for unsupervised learning, wherein in accordance with the unsupervised learning approach, the training data should be accordingly structured and/or labeled. It is also conceivable that each training input value x may have more than one corresponding training output values $y^{true}$.

Subsequently, a loop for $i = 1, ..., N$ over the training data is started in step 602.

In step 603, for the $i$-th training input value $x_i$, the variable $c_i$ according to equation (3) is generated for each desired target classification $y_i^{targ}$ different from the assigned true classification $y_i^{true}$. The variable $c_i$ for each desired target classification can be expressed as a matrix: $e_{y_i} 1^T$ - $diag(1)$. Each determined variable $c_i$ comprised in said matrix, can be utilized to determine the objective function $J$ for the $i$-th training input value $x_i$. Then, the objective function $J_i$ is determined according to the method shown in figure 3.

Afterwards (step 604), a loss function $L_i$, characterizing a difference between the determined objective function $J_i$ and the training output value $y_i$, is determined. Preferably, a 0-1 loss function is utilized. It is also possible to use several different loss functions for the different output values of the dual network 500, objective functions and/or for the different utilized training output values. The index $i$ of the loop is increased by one and steps 603 and 604 is repeated until the index $i$ equals $N$, as defined in step 602.

When the loop over all training data is finished, step 605 is carried out. Here, each determined loss function $L_i$ is summed up and the sum over all loss functions is optimized, for example:

$$\min_{\theta} \sum_{i=1}^{N} L_i\{-J_\epsilon\left(x_i, g_\theta\left(e_{y_i} 1^T - diag(1)\right)\right), y_i\} \tag{17}$$

The equation (17) can be optimized by gradient descent. The gradient descent determines the change $\Delta\theta$ of the parameter $\theta$ of the neural network (100) in order to minimize the sum over the loss functions $L_i$. Advantageously, the change $\Delta\theta$ of the parameter $\theta$ is used to adjust said parameters and step 605 is repeated until the determined change $\Delta\theta$ of the parameter $\theta$ is smaller than a given threshold.

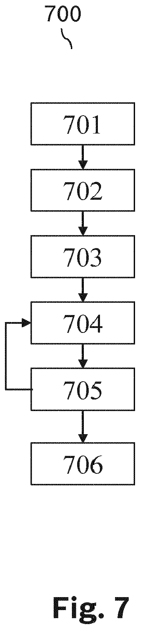

Figure 7 shows schematically a flow chart 700 of a method to increase the efficiency and speed up the training of the neuronal network 100 as described in figure 6, particularly to speed up step 603. It is also possible to utilize this method to speed up the step 306 of figure 3.

Recap the objective function defined by equation (8): $J(x, v_{1:k}) = -\sum_{i=2}^{k} h_i(v_{i:k}) - v_1^T x - \epsilon\|v_1\|_q$. The computation of the second and third term ($v_1^T x$, $\epsilon\|v_1\|_q$) are dependent on the whole dual neuronal network 500, and therefore computationally expensive. However, these terms can be efficiently approximated according to the shown method in figure 7.

In the first step 701, the lower and upper bounds for each layer of the dual network 500 are given.

In the next step 702, a matrix $R_1$ is initialized with a size of $|z_1| \times r$. The elements of the matrix $R_1$ are sampled from a Cauchy distribution. Note that this matrix $R_1$ corresponds to the $l_1$ bound.

Subsequently, in step 703, a loop over the layers $i = 2, ..., k$ is started with loop index $i$.

In the step 704, over an index $j = 1, ..., i - 1$ is iterated, wherein for each value of the index $j$, a new random matrix $R_j^i := \sum_{k=1}^{i-1} g_{k,i}^T(R_i^k)$ is determined and $S_j^i := \sum_{k=1}^{i-1} g_{k,i}^T(S_i^k)$ is determined. This corresponds to propagating $r$ random vectors (and an additional vector, e.g. $1^T$) through the dual network.

After step 704 has been finished, step 705 is carried out. In step 705, a new matrix $R_i^1 := diag(d_i)Cauchy(|z_i|, r)$ and $S_i^1 := d_i$ are determined ($d_i$ is determined according to equation (19)). Then, the index $i$ is increased by one and steps 704 and 705 are repeated until $i = k$ is fulfilled.

In step 706, the term $\|v_1\|_q$ and the term $h_i(v_{i:k})$ for the ReLu layer can be more efficiently calculated. For the case that the dual norm is equal to the $l_1$ norm, this can be effiecntly calculated by:

$$\left\|v_1\right\|_1 \approx median\left(|g(R)|\right) \approx median\left(|RW_1^T D_2 W_2^T ... D_n W_n|\right) \approx median\left(\left|v_1^T R\right|\right) \tag{18}$$

where $R$ is a $|z_1| \times r$ standard Cauchy random matrix, and the median is taken over the second axis.

The second term of the ReLu function is expressed as:

$$\sum_{j\in I} l_{i,j} \times max[v_{i,j}, 0] \approx \frac{1}{2}\left[-(median(\,|g_j(h(R))|) + g_j(h(1^T))\right] \qquad (19)$$

$$\approx \frac{1}{2}(-median(\,|v_i^T \, diag(d_i)R|) + v_i^T d_i)$$

$$\text{with } d_{i,j} = \begin{cases} \frac{u_{i,j}}{u_{i,j}-l_{i,j}}, & j \notin I_i \\ 0, & j \in I_i \end{cases}$$

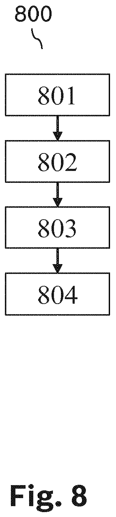

Figure 8 shows an embodiment of a flow chart 800 of a method for detecting possible adversarial examples of the input value $x$.

In the first step 801, the neural network 100 determines dependent on an input value an output value $y^{pred}$.

In step 802, the objective function $J$ is determined for all possible target classifications according to following equation:

$$J_\epsilon\left(x, g_\theta\left(e_{y^{pred}}\, 1^T - diag(1)\right)\right) \qquad (20)$$

In the succeeding step 803, the objective function $J$ is compared with a threshold. For example: $J_\epsilon(x,g_\theta(e_{ypred}\, 1^T - diag(1))) \geq 0$, then there does not exist a modification of the input that can be misclassified by the neural network 100. If the objective function $J$ is positive, then the result of the comparision is true, which characterizes that there does not exist a modification of the input image within the ball $B(x)$ that could be misclassifiyed. Otherwise, if the objective function is not positive, the result of the comparison is false.

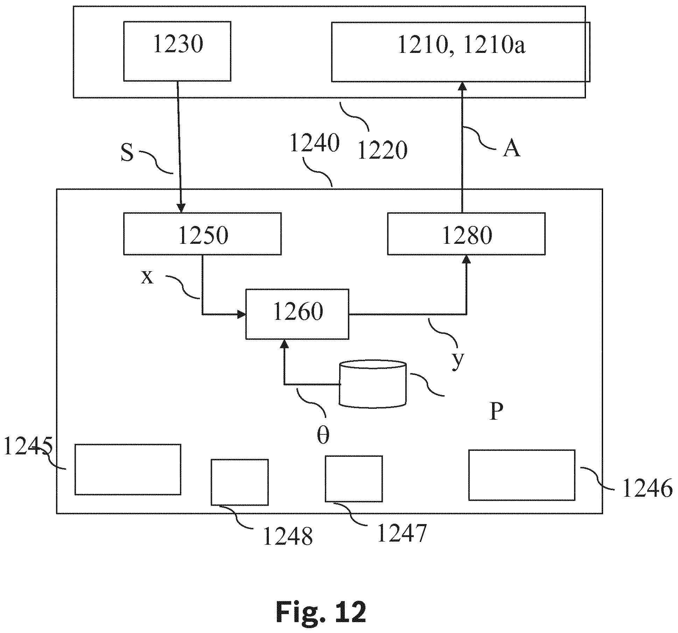

Optionally, step 804 is carried out. In this step, the output value $y^{pred}$ of the neural network 100 is released or rejected dependent on the result of the comparison. E.g. if the result of the comparison is true, the output value $y^{pred}$ can be utilized to control a technical system (for more information, see figure 12). Alternative, an authorization signal or a robustness certificate can be generated, when the result of step 803 is true. The authorization signal or the robustness certificate can be used to check before utilizing the output value $y^{pred}$. Preferably, the authorization signal and/or the robustness certificate are encrypted to prevent a maliciously manipulating.

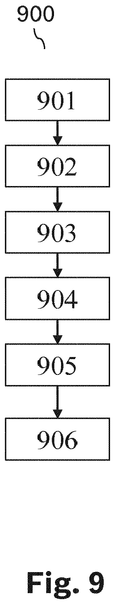

Figure 9 shows schematically a flow chart 900 of a method to determine the largest perturbation value $\varepsilon$ such that the output value of the neural network 100 cannot be flipped probably to another class than the determined class by the neural network 100. This can be also seen as a measurement, how far the decision boundary is away from the output of the neural network.

In the first step 901, the neural network 100 determines dependent on an input value an output value $y^{pred}$.

In step 902, the objective function $J$ is determined for all possible target classifications $J_\epsilon(x.g_\theta(e_{ypred}\, 1^T - diag(1)))$.

Subsequently (step 903), the largest perturbation value $\varepsilon$ is determined. This can be determined according to following equation:

$$\max_\epsilon \epsilon \qquad (21)$$

$$\text{subject to } J_\epsilon\left(x, g_\theta\left(e_{y^{pred}}\, 1^T - diag(1)\right)\right) \geq 0$$

Particularly, equation (21) can be solved utilizing Newton's method. Additionally or alternatively, a binary search can be used to solve equation (21). Another way to solve equation (21) can be by incrementally increasing $\varepsilon$ while the objective function stays positive.

Optionally, if the largest perturbation value for the given input value is determined, step 901 until 903 can be repeated for another input value. If more than two largest perturbations are determined for different input values, step 904 can be carried out. Here, the smallest determined perturbation value is ascertained and returned. Dependent on this returned perturbation value, a robustness certificate can be generated. This robustness certificate can be used in one of the described methods, where a given perturbation value $\varepsilon$ is required.

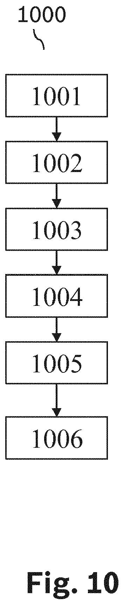

Figure 10 shows schematically an embodiment of a flow chart 1000 of a method for determining tighter bounds of the activation functions, in particular of the neurons with a ReLu activation function.

The method starts with step 1001. In this step a neural network 100 is given, wherein the neural network can be described by $f_\theta$ with ReLu activation functions and exemplary with a batch normalization layer. Moreover, in step 1001 the input value x and the perturbation $\varepsilon$ are provided.

In the subsequent step 1002, upper and lower bounds $l_i, u_i$ are determined for each layer $i$, in particular for each neuron of the layers. The upper and lower bounds can be determined according to the method shown in figure 4. Alternatively, the upper bounds can be determined by propagating through the dual neural network 500 the variable $c$, which is given for this case by a positive diagonal matrix $c = I$, which can be column - wise propagated through the dual neural network 500 and the max. values for each layer of said propagated diagonal matrices scaled dependent on the input value (x) are used as the upper bounds. The same procedure can be done by propagating $c = -I$ and determine thereof the maximum value, which are the lower bounds.

Then, in step 1003, in addition to the determined upper and lower bounds of step 1002, a linear inequality $A_i z_i \leq b_i$ is initialized and the input value $z_i$ of the layer $i$ are limited to following allowable $\tilde{Z}_i$ set of input values:

$$\tilde{Z}_i = \{z_i | l_i \leq z_i \leq u_i \ \cup A_i z_i \leq b_i \} \qquad (22)$$

The initialization of the matrix $A_i$ is done by choosing an arbitrary size $m$ of the first dimension of the matrix $A_i$, wherein the second dimension is dependent on the size of the layer: $\dim(z_i)$. The first dimension of the matrix $A_i$ can be proportional to the position of the corresponding layer $i$ in the neural network 100 and polynomial to the number of neurons of the corresponding layer $i$.

Preferably, the first layer of the neural network 100 comprises a matrix $A_i$, which has the advantage that a better approximation of the norm bounded modification of the input value can be described. Deeper layers, e.g. the last few layers, should comprise a matrix $A_i$ in order to minimize the error between the output adversarial polytope 180 and the bounded convex polytope 200. Furthermore, the deeper the layers of the neuronal network 100 get, the larger the size of the matrix $A_i$ should be choosen. By choosing a certain size $m$ of the matrix $A_i$, m additional constraints are added to limit the allowable set $\tilde{Z}_i$ of input values.

In another embodiment of the matrix $A_i$, said matrix can be a convolution matrix.

In step 1004, the elements of the matrix $A_i$ are determined. There are two options to determine the elements of the matrix $A_i$. In the first option, the elements are randomly sampled from a given distribution (e.g. Gaussian distribution, aligned around the origin). In the other option, the elements are the upper and lower bounds of a previous layer.

The vector $b_i$ of the linear inequality $A_i z_i \leq b_i$ can be determined according to the alternative method for determining the upper bounds by propagating $c_i = A_i$ row-wise through the dual neural network to determine the vector $b_i$ (similar to step 1002 for determining the upper and lower bounds by propagation the matrix $I$ through the dual neural network).

In the succeeding step 1005, the elements of the matrix $A_i$ are optimized. For the case that the activation functions are given by the ReLu activation function, the optimization over the elements of the matrix $a_i$ can be done by solving the following equation in particular by gradient descent dependent on the elements of the matrix $A_i$:

$$\min_{\lambda \geq 0} b_i^T \lambda + \sum_{j \in I_i^-} max\{(a_{i,j}^T \lambda + v_{i,j})l_{i,j}, (a_{i,j}^T \lambda + v_{i,j})u_{i,j}\} \qquad (23)$$
$$+ \sum_{j \in I_i^+} max\{(a_{i,j}^T \lambda + v_{i,j} - v_{i+1,j})l_{i,j}, (a_{i,j}^T \lambda + v_{i,j} - v_{i+1,j})u_{i,j}\}$$
$$+ \sum_{j \in I_i} max\{(a_{i,j}^T \lambda + v_{i,j})l_{i,j}, (a_{i,j}^T \lambda + v_{i,j} - v_{i+1,j})u_{i,j}, 0\}$$

In a further embodiment, the step size of the gradient descent can be varied dependent on the progress of finding the minimum of equation (23).

If the elements of the matrix $A_i$ are choosen to be the upper and lower bounds of the previous layer, the elements of the matrix $A_i$ can be optimized according to equation (23) similarly by utilizing gradient descent. Additionally or alternatively, the initialized matrix $A_i$ can be optimized by multiplying the matrix $A_i$ by an inverse matrix characterizing the transformation of the previous layer. Preferably, the inverse matrix is the inverse or pseudo-inverse, left- or a right inverse of the matrix $W_i$ containing in particular the weights of the previous layer.

After the elements of the matrix $A_i$ are optimized in step 1005, the vector $b_i$ can be updated in step 1006. For example, as done in step 1004.

In an optional subsequent step, the upper and lower bounds can be update, e.g. according to step 1002. It is possible to repeat the step 1005 and step 1006 since the matrix $A_i$ and the vector $b_i$ are linked with each other and if one of them is changed, the other has to be adapted.

The dual transformations of the respective dual layer $i$ of the dual neural network can be determined by the matrix $A_i$ together with the already determined or update upper and lower bounds of the respective dual layer $i$. The optimization problem according to equation (23) has to be solved (e.g. by gradient descent) dependent on $\lambda$ (find a value for $\lambda$ that minimizes the optimization problem of equation (23)) to determine the dual transformation, which is characterized by equation (23) as an upper bound according to equation (6) of a conjugate ReLu function.

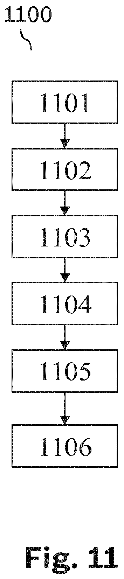

Figure 11 depicts a flow chart 1100 of a method for utilizing the trained neural network 100 for controlling a technical system, such as a partly autonomous robot or vehicle, and optionally detecting adversarial examples before controlling the technical system. Note that different configurations of the technical system are shown exemplary in the subsequent figures 12 to 18.

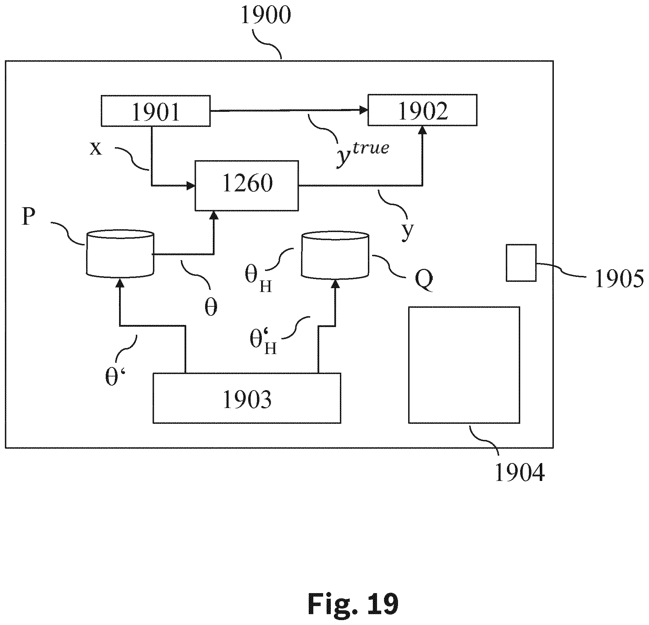

This method starts with step 1101. This step is used to acquire training data $D$ comprising training input images and assigned training output values. The training input images can be images of a camera and the respective training output values can characterize a classification of the training images into one of several classes, e.g. class pedestrian or different road signs. These training data $D$ can be provided a training system as shown in figure 19, which is configured to train the neural network 100 according to the method described in figure 6.

Subsequently (step 1102), the neural network 100 is trained according to the method described in figure 6 with the training data $D$ of step 1101. After training the neural network 100, the method for determining the largest perturbation $\varepsilon$ as described in figure 9 may be carried out, preferably, each training input image is used to determine the largest perturbation $\varepsilon$. Step 1102 can be carried out on a server or in the technical system itself. The trained neural network, in particular the parametrization and optional the architecture, and when applicable, the largest perturbation $\varepsilon$ can be transmitted from the server into the technical system and stored in a storage of the technical system. Additionally, the method for testing the trained neural network on whether a modification of the input image can fool the trained neural network according to figure 3 can be carried out.

In step 1103, a sensor, e.g. the camera, of the technical system senses an environment and the trained neural network receives the sensor value, e.g. image.

In step 1104, the trained neural network determines an output value dependent on the sensor value.

Step 1105 may be carried out. Here, the received sensor value is checked whether it is an adversarial example of the sensor value as described in figure 8. An authentication signal can be generated dependent on the result of the detection of an adversarial example.

After step 1104 or step 1105, step 1106 is carried out. Dependent on the output value of step 1104, a control signal for the technical system is generated. The control signal may depend on the authentication signal of step 1105. In one embodiment, only if the authentication signal characterizes that the input of the neural network is not an adversarial example, then the control signal is generated. In another embodiment, the generated control signal can be discarded dependent on the control signal. A motor or a braking system of the technical system can be controlled by the control signal of step 1106.

Shown in figure 12 is one embodiment of an actuator 1210 in its environment 1220. Actuator 1210 interacts with an actuator control system 1240. Actuator 1210 and its environment 1220 will be jointly called actuator system. At preferably evenly spaced distances, a sensor 1230 senses a condition of the actuator system. The sensor 1230 may comprise several sensors. An output signal S of sensor 1230 (or, in case the sensor 1230 comprises a plurality of sensors, an output signal S for each of the sensors) which encodes the sensed condition is transmitted to the actuator control system 1240. In another embodiment, the actuator control system 1240 can receive fictive sensor values for testing the actuator control system 1240.

Thereby, actuator control system 1240 receives a stream of sensor signals S. It the computes a series of actuator control commands A depending on the stream of sensor signals S, which are then transmitted to actuator 1210.

Actuator control system 1240 receives the stream of sensor signals S of sensor 1230 in an optional receiving unit 1250. Receiving unit 1250 transforms the sensor signals S into input signals x. Alternatively, in case of no receiving unit 1250, each sensor signal S may directly be taken as an input signal x. Input signal x may, for example, be given as an excerpt from sensor signal S. Alternatively, sensor signal S may be processed to yield input signal x. Input signal x may, for example, comprise images, or frames of video recordings. In other words, input signal x is provided in accordance with sensor signal S.

Input signal x is then passed on to an automated learning system 1260, which may, for example, be given by the neural network 100.

Automated learning system 1260 is parametrized by parameters θ, which are stored in and provided by parameter storage P.

Automated learning system 1260 determines output signals y from input signals x. Output signals y are transmitted to a conversion unit 1280, which converts the output signals y into control signals or control commands A. Actuator control commands A are then transmitted to actuator 1210 for controlling actuator 1210 accordingly.

Actuator 1210 receives actuator control commands A, is controlled accordingly and carries out an action corresponding to actuator control commands A. Actuator 1210 may comprise a control logic, which transforms actuator control command A into a further control command, which is then used to control actuator 1210.

In further embodiments, actuator control system 1240 may comprise sensor 1230. The sensor 1230 can be a camera, Radar or Lidar sensor. The sensors are not limited to those, other conceivable sensor as audio sensor are also applicable. In even further embodiments, actuator control system 1240 alternatively or additionally may comprise actuator 1210.

Furthermore, actuator control system 1240 may comprise a processor 45 (or a plurality of processors) and at least one machine-readable storage medium 46 on which instructions are stored which, if carried out, cause actuator control system 1240 to carry out the methods according to one of the previous figures.

Alternatively or additionally to actuator 1210, the embodiment may comprise a display unit 1210a which may also be controlled in accordance with actuator control commands A. Alternatively, the display unit 1210a belongs to a measurement system, wherein the automated learning system is used to determine a measurement value dependent on the input value.

In a further embodiment of the actuator control system 1240, the actuator control system 1240 comprises a robustness certificate generator 1247. The robustness certificate generator 1247 is configured to generate a robustness certificate corresponding to the method shown in figure 8 for example. A generated robustness certificate may be displayed on the display unit 1210a or may be used to release the control command A for controlling actuator 1210. In another embodiment the actuator control system 1240 comprise an adversarial example detector 1248 executing the method according to figure 8.

In all of the above embodiments, automated learning system 1260 may comprise a classifier that is configured to classify the input signal x belongs to one of several predefined classes. In another embodiment, the automated learning system 1260 is configured to classify an image region or is configured to pixelwise classify an image.

Additionally or alternatively, the output signal y or the control signal or control command A is displayed on a display unit 1210a.

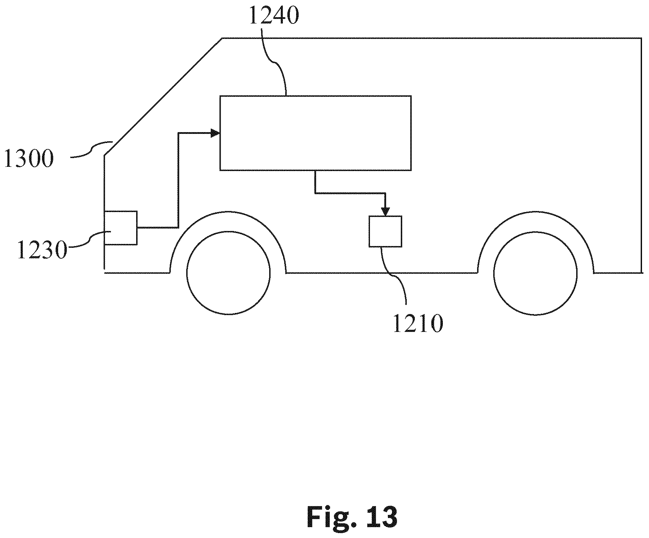

Figure 13 shows an embodiment in which actuator control system 1240 is used to control an at least partially autonomous robot, e.g. an at least partially autonomous vehicle 1300, dependent on the output value of the automated learning system 1260.

Sensor 1230 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 1300. Alternatively or additionally sensor 1230 may comprise an information system for determining a state of the actuator system. One example for such an information system is a weather information system, which determines a present or future state of the weather in environment 1220. Further information can be received by communication system or via the internet.

For example, using input signal x, the automated learning system 1260 may for example detect objects in the vicinity of the at least partially autonomous robot. Output signal y may comprise an information that characterizes objects, which are located in the vicinity of the at least partially autonomous robot. Control command A may then be determined in accordance with this information, for example to avoid collisions with said detected objects.

Actuator 1210, which is preferably integrated in vehicle 1300, may be given by a brake, a propulsion system, an engine, a drivetrain, or a steering of vehicle 1300. Actuator control commands A may be determined such that actuator (or actuators) 1210 is/are controlled such that vehicle 1300 avoids collisions with said detected objects. Detected objects may also be classified according to what they automated learning system 1260 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 1230, preferably an optical sensor, to determine a state of plants in the environment 1220. Actuator 1210 may be a nozzle for spraying chemicals. Depending on an identified species and/or an identified state of the plants, an actuator control command A may be determined to cause actuator 1210 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 1230, e.g. an optical sensor, may detect a state of an object, which is to undergo processing by the household appliance. For example, in the case of the domestic appliance being a washing machine, sensor 1230 may detect a state of the laundry inside the washing machine. Actuator control signal A may then be determined depending on a detected material of the laundry.

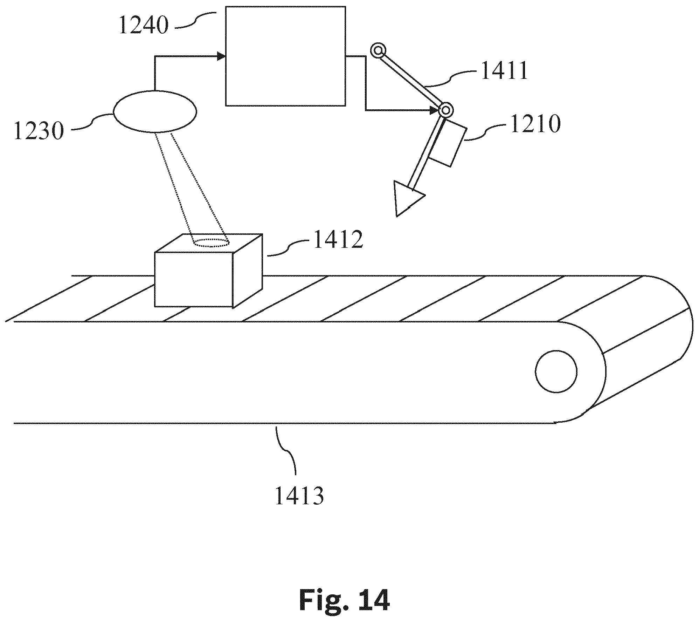

Shown in figure 14 is an embodiment in which actuator control system 1240 is used to control a manufacturing machine 1411, e.g. a punch cutter, a cutter or a gun drill) of a manufacturing system 200, e.g. as part of a production line. The actuator control system 1240 controls an actuator 1210 which in turn control the manufacturing machine 1413 dependent on the output value of the automated learning system 1260 of the actuator control system 1240.

Sensor 1230 may be given by an optical sensor, which captures properties of e.g. a manufactured product 1412. Automated learning system 1260 may determine a state of the manufactured product 1412 or the manufactured product 1412 itself from these captured properties. Actuator 1210 which controls manufacturing machine 1411 may then be controlled depending on the determined state of the manufactured product 1412 for a subsequent manufacturing step of manufactured product 1412 determined by the automated learning system 1260 or determined by the actuator control system 1240. Alternatively, it may be envisioned that actuator 1210 is controlled during manufacturing of a subsequent manufactured product 1412 depending on the determined state of the manufactured product 1412.

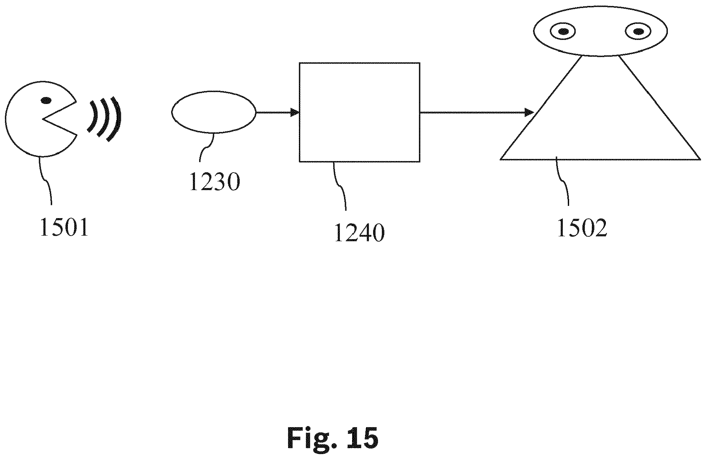

Shown in figure 15 is an embodiment in which actuator control system 1240 is used for controlling an automated personal assistant 1502. In a preferred embodiment, sensor 1230 may be an acoustic sensor, which receives voice commands of a human user 1501. Sensor 1230 may also comprise an optic sensor, e.g. for receiving video images of a gestures of user 1501.

Actuator control system 1240 then determines actuator control commands A for controlling the automated personal assistant 1502. The actuator control commands A are determined in accordance with sensor signal S of sensor 1230. Sensor signal S is transmitted to the actuator control system 1240. For example, automated learning system 1260 may be configured to e.g. carry out a gesture recognition algorithm to identify a gesture made by user 1501, or it may be configured to carry out a voice command recognition algorithm to identify a spoken command uttered by user 1501. Actuator control system 1240 may then determine an actuator control command A for transmission to the automated personal assistant 1502. It then transmits said actuator control command A to the automated personal assistant 1502.

For example, actuator control command A may be determined in accordance with the identified user gesture or the identified user voice command recognized by automated learning system 1260. It may then comprise information that causes the automated personal assistant 1502 to retrieve information from a database and output this retrieved information in a form suitable for reception by user 1501.

In further embodiments, it may be envisioned that instead of the automated personal assistant 1502, actuator control system 1240 controls a domestic appliance (not shown) controlled in accordance with the identified user gesture or the identified user voice command. The domestic appliance may be a washing machine, a stove, an oven, a microwave or a dishwasher.

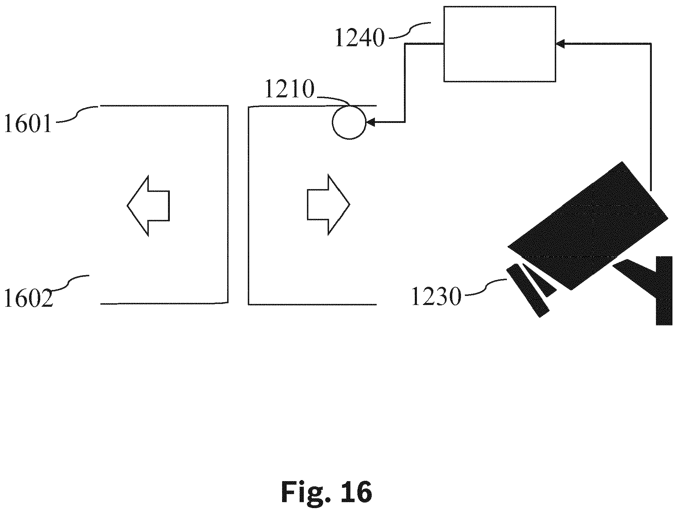

Shown in figure 16 is an embodiment in which actuator control system controls an access control system 1602. Access control system may be designed to physically control access. It may, for example, comprise a door 1601. Sensor 1230 is configured to detect a scene that is relevant for deciding whether access is to be granted or not. It may for example be an optical sensor for providing image or video data, for detecting a person's face. Automated learning system 1260 may be configured to interpret this image or video data e.g. by matching identities with known people stored in a database, thereby determining an identity of the person. Actuator control signal A may then be determined depending on the interpretation of automated learning system 1260, e.g. in accordance with the determined identity. Actuator 1210 may be a lock, which grants access or not depending on actuator control signal A. A non-physical, logical access control is also possible. In another embodiment, the actuator control system controls a heating system, wherein the actuator control system is configured to determine the desired climate of the owner dependent on a measured temperature and/or humidity values and optionally dependent on a weather forecast or the daytime.

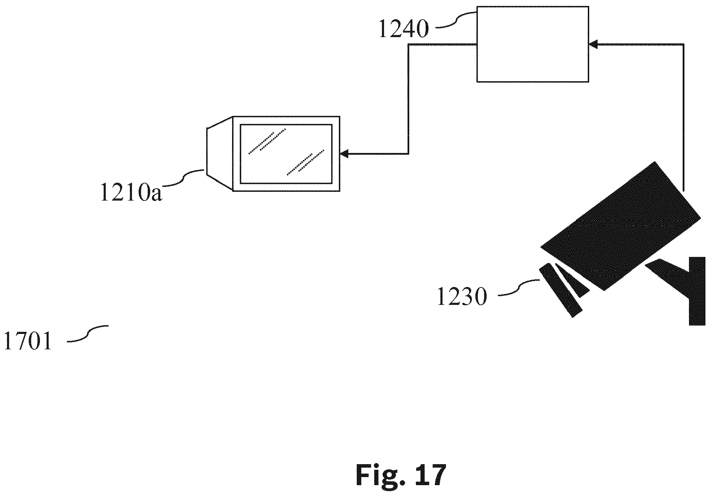

Shown in figure 17 is an embodiment in which actuator control system 1240 controls a surveillance system 1701. This embodiment is largely identical to the embodiment shown in figure 16. Therefore, only the differing aspects will be described in detail. Sensor 1230 is configured to detect a scene that is under surveillance. Actuator control system does not necessarily control an actuator 1210, but a display 1210a. For example, the automated learning system 1260 may determine whether a scene detected by optical sensor 1230 is suspicious. Actuator control signal A which is transmitted to display 1210a may then e.g. be configured to cause display 1210a to highlight an object that is deemed suspicious by automated learning system 1260.

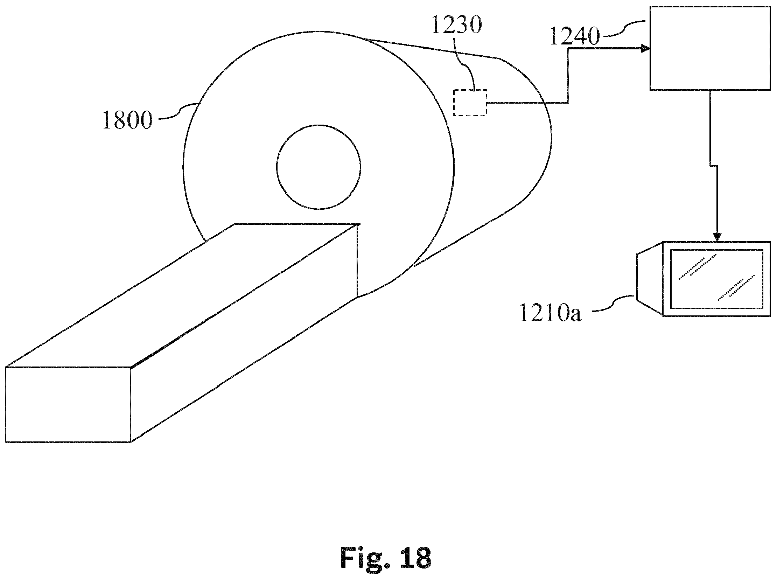

Shown in figure 18 is an embodiment of an actuator control system 1240 for controlling an imaging system 1800, for example an MRI apparatus, x-ray imaging apparatus or ultrasonic imaging apparatus. Sensor 1230 may, for example, be an imaging sensor, the sensed image of which is interpreted by automated learning system 1260. Actuator control signal A may then be chosen in accordance with this interpretation, thereby controlling display 1210a. For example, automated learning system 1260 may interpret a region of the sensed image to be potentially anomalous. In this case, actuator control signal A may be determined to cause display 1210a to display the imaging and highlighting the potentially anomalous region.

Shown in figure 19 is an embodiment of a training system 1900 for (re-)training automated learning system 1260, particularly the training system is configured to carry out the method according to figure 6. A training data unit 1901 determines input signals x, which are passed on to automated learning system 1260. For example, training data unit 1901 may access a computer-implemented database Q in which a set T of training data is stored. Set T comprises pairs of input signal x and corresponding desired labeled output signal $y^{true}$. Training data unit 1901 selects samples from set T, e.g. randomly. Input signal x of a selected sample is passed on to automated learning system 1260. Desired output signal $y^{true}$ is passed on to assessment unit 1902.

Automated learning system 1260 is configured to compute output signals y from input signals x. These output signals x are also passed on to assessment unit 1902.

A modification unit 1903 determines updated parameters θ' depending on input from assessment unit 1902. Updated parameters 0'are transmitted to parameter storage P to replace present parameters θ of the automated learning system or adjust the parameters according to the updated parameters θ'.

For example, it may be envisioned that assessment unit 1902 determines the value of the loss functions L depending on output signals y and desired output $y^{true}$. Modification unit 1903 may then compute updated parameters θ' using e.g. stochastic gradient descent to optimize the loss function L

Furthermore, training system 1900 may comprise a processor 1904 (or a plurality of processors) and at least one machine-readable storage medium 1905 on which instructions are stored which, if carried out, cause actuator control system 1900 to carry out a method according to one aspect of the invention.

Preferably, the processor 1904 comprises at least a Central Processing Unit (CPU), a Graphics Processing Unit (GPU) and/or a Tensor Processing Unit (TPU). Alternatively, the processor 1904 can be partitioned into a distributed computer system, which are connected with each other via a communication system such as the internet. The computer system may comprise backend components, e.g. data sever, and middleware components, e.g. an application/client server and frontend components, e.g. a computer with a graphic interface and/or a sensor like a camera or a sensor network.

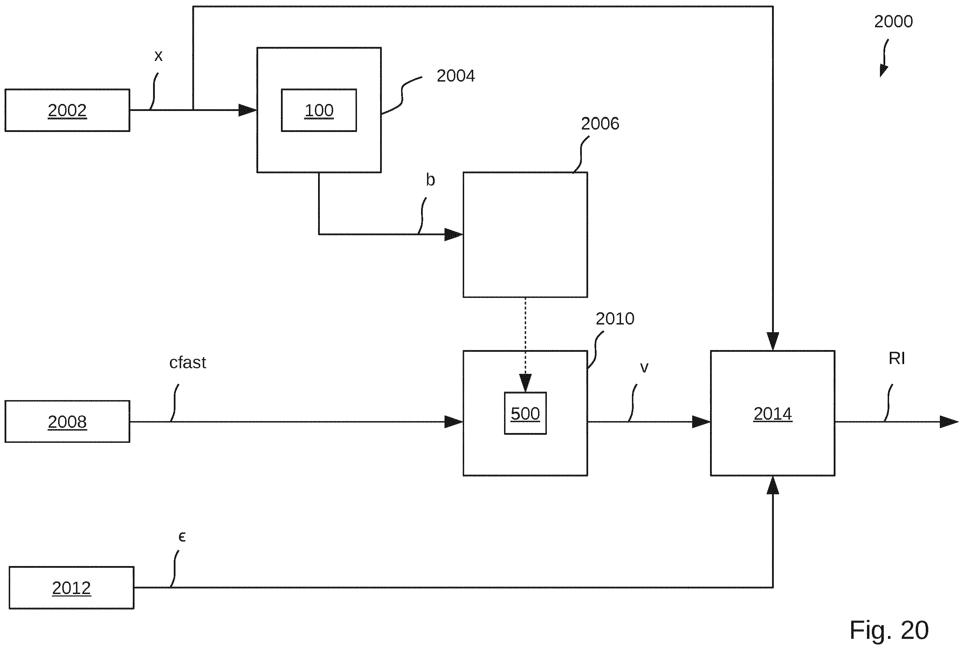

Figure 20 depicts a schematic block diagram for determining a robustness indicator RI. A robustness indicator unit 2000 determines the robustness indicator RI for the trained artificial neural network 100. The robustness indicator RI indicates a robustness of the trained artificial neural network 510 against adversarial attacks.

A first provisioning unit 2002 is configured to determine or provide first input data x for the trained artificial neural network 100. In an example, the first input data x is determined a-priori and is being provided by the first provisioning unit 2002.

A second provisioning unit 2012 is configured to determine or provide perturbation data ε for the first input data x.

A first determination unit 2004 is configured to determine upper and lower bounds b of activation functions of the trained artificial neural network 100 by propagating the first input data x through the trained artificial neural network 100, wherein the first input data x is provided as an input parameter for an input layer of the trained artificial neural network 100. The determined upper and lower bounds b of the activation functions are in particular upper and lower bounds of signals that are transformed by the activation functions. For example, the lower and upper bounds b are determined for pre-ReLu activations. For the determination of the upper and lower bounds b reference is made to the description of figure 4. According to an example, the first determination unit 2004 is configured according to the method steps described in figure 4.

A second determination unit 2006 is configured to determine a dual artificial neural network 510 in dependence on the trained artificial neural network 100, wherein, in the dual artificial neural network 510, an output layer originating from the trained artificial neural network 100 is replaced by an input layer, wherein, in the dual artificial network 510, the input layer originating from the trained artificial neural network 100 is replaced by an output layer, wherein activation functions of the dual artificial network 510 are determined in dependence on the determined upper and lower bounds b. According to an example, the second determination unit 2006 is configured according to the method steps of figure 5. The dual artificial neural network 510 is also termed dual network.

The input data c is determined in the methods described with respect to the figures 1 to 10 according to the following equation 24, wherein ey* denotes the true classification result and eytarg the target classification. Therefore, input data c is a sparse tensor.

$$c = e_{y^*} - e_{y^{targ}} \qquad (24)$$

A third provisioning unit 2008 is configured to determine or provide second input data cfast for the dual artificial neural network 510. In an example the second input data cfast is determines in dependence on one class y* of the output layer of the trained artificial neural network 100. The second input data cfast is a dense tensor. A dense tensor does not comprise Zeros.

The second input data cfast is exemplary determined according to the following equation, wherein I denotes a tensor, in particular a vector, comprising a plurality of 1's.

$$c_{fast} = 2e_{y^*} - I \qquad (25)$$

The true classification result ey* comprises the correct classification which is expected to be determined by the trained artificial neural network 100 for the given input data x. Therefore, the second input data cfast comprises only non-zero values: one positive value and a plurality of negative values. Consequently, according to an example, the single values of the second input data cast may also depart from -1 and 1.

Furthermore, the following optimization problem according to equation 26 has to be solved:

$$\min_{z_k} c_{fast}{}^T z_k$$

$$subject\ to\ z_i = \sum_{j=1}^{i-1} f_{i,j}(z_j),\ \ for\ i = 2, ..., k$$

$$z_1 \in B(x)$$

$$(26)$$

It is proposed to solve the optimization problem of equation 26 according to the method described for equation 3. Alternatively, equation 26 can be solved by gradient descent or a linear optimization solver.

The resulting effect of the provided cfast is explained in the following. For this example, the last layer of the trained artificial neural network is a softmax layer, which results in that a sum over y equals 1. For example: y_1 = [.2 .2 .2 .4]. Exemplarily, the input to the trained artificial neural network 100 is an image and the output of the trained artificial neural network 100 is a classification vector with 4 classes. So, for example, if y equals [0 0 0 1] the image belongs to the fourth class. For this example, the second input data cfast has these predefined entries: cfast = [-1 -1 -1 1].

The scalar product of $c_{fast}{}^T y\_1$ results in -.6+.4= -.2. This alone would not give a guarantee that the trained artificial neural network 100 is robust because the scalar product is not positive or greater than a predefined safety margin. However, by y_1 is given a correct classification. This means that if more than 50% of the sum over the y (softmax output) is not allocated in the correct class (.2+.2+.2=.6), the solution of the equation 26 does not give a guarantee whether the trained artificial neural network is robust.

In the case that more than 50% of the classification is allocated in the correct class, e.g. y_2 = [.1 .1 0 .8], the scalar product of c_new^T*y_2 is positive. That means that a correct classification is given by the trained artificial neural network 100.

This means that the second input data cfast tests whether more than 50% of the classification is located in the correct class. Therefore, if the minimum of equation 26 is positive, then for all possible perturbed input values x within the ball B(x), the trained artificial neural network 100 allocates more than 50% of the classification in the correct class. Consequently, the trained artificial neural network 100 is robust against all modifications / perturbations ε.

Note that with cfast a different kind of robustness is determined compared to the robustness of Wong et al. Wong et al. determines a more accurate robustness (y_1 would be robust since only one -1 is utilized), where the proposed test with cfast is less accurate but the determination is accelerated in comparison.

Therefore, the second input data cfast for the dual artificial neural network 510 comprises a plurality of -1's and only a single 1 for the true classification.

A second determination unit 2010 is configured to propagate the second input data cfast through the dual artificial neural network 510, wherein the second input data cfast is provided as an input parameter for the input layer of the dual artificial neural network 510, and wherein output data v is provided as an output parameter of the output layer of the dual artificial neural network 510.

A third determination unit 2014 is configured to determine the robustness indicator RI for the trained artificial neural network 100 in dependence on the first input data x, in dependence on the perturbation data ε, and in dependence on the output data v of the dual artificial neural network 510.

The third determination unit 2014 determines the objective function J according to equation 8. The determination result of the objective function J is compared with a threshold, for example Zero. Of course, the threshold could be determined greater than zero, for example 0.2, to establish a safety margin. If the determination result of the objective function is greater than the threshold, the examined trained artificial neural network 100 is robust and the robust indicator RI is provided. If the determination result of the objective function is smaller than the threshold, the determination unit 2014 determines no robustness indicator RI or a robustness indicator RI indicating that robustness of the artificial neural network 100 is not present.

According to an example, the provided use of cfast is a pre-test being executed prior to testing x with the methods described with respect to figures 1 to 10. If the pre-test returns that the minimum of equation 26 is not positive, the method of figures 1 to 10 is applied in order to get a more precise result. The method of figures 1 to 10 would return for y_1 that the trained artificial neural network 100 is robust because the scalar product of c^T*y_1 is positive. If the method of figures 1 to 10 also does not returns a positive value, then there does not exist a robustness of the trained artificial neural network 100.

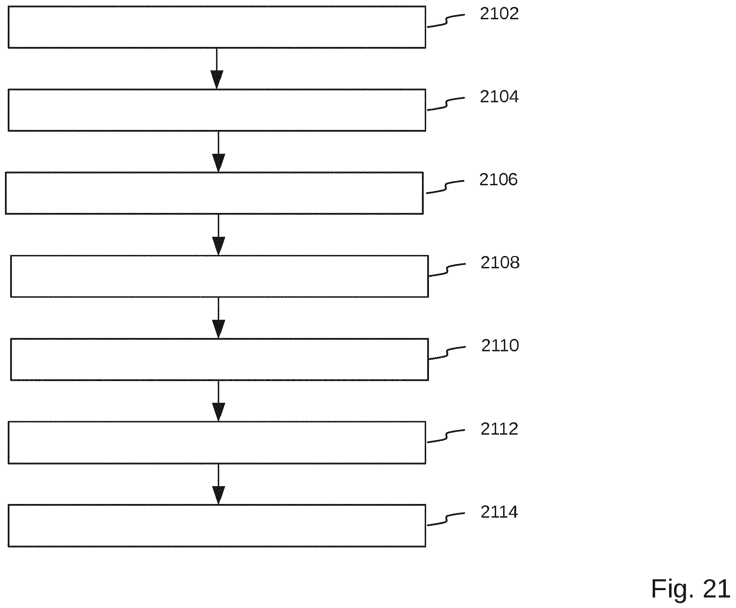

Figure 21 depicts a schematic flow chart of a computer-implemented method for determining the robustness indicator RI for the trained artificial neural network 100 as exemplified in figure 20.

According to a step 2102 the first input data x is determined or provided for the trained artificial neural network 100.

According to the step 2104 the perturbation data ε for the first input data x is provided or determined.

According to a step 2106 the upper and lower bounds b of activation functions of the trained artificial neural network 100 are determined by propagating input data, being determined in dependence on the first input data x and the perturbation data ε, through the trained artificial neural network 100, wherein the first input data x is provided as the input parameter for the input layer of the trained artificial neural network 100. In particular the input data of the trained artificial neural network 100 is determined as a sum of the input data x and the perturbation data ε.

According to a step 2108 the dual artificial neural network 510 is determined in dependence on the trained artificial neural network 100, wherein, in the dual artificial neural network 510, the output layer originating from the trained artificial neural network 100 is replaced by the input layer, wherein, in the dual artificial network 510, the input layer originating from the trained artificial neural network 100 is replaced by the output layer, wherein the activation functions of the dual artificial network 510 are determined in dependence on the determined upper and lower bounds b.

According to a step 2110 the second input data cfast for the dual artificial neural network 510 is provided or determined, in particular in dependence on one class y* of the output layer of the trained artificial neural network 100, wherein the second input data cfast is a dense tensor.

According to a step 2112 the second input data cfast is propagated through the dual artificial neural network 510, wherein the second input data cfast is provided as the input parameter for the input layer of the dual artificial neural network 510, and wherein the output data v is provided as the output parameter of the output layer of the dual artificial neural network 510.

According to a step 2114 the robustness indicator RI for the trained artificial neural network 100 is determined in dependence on the first input data x, in dependence on the perturbation data ε, and in dependence on the output data v of the dual artificial neural network 510.

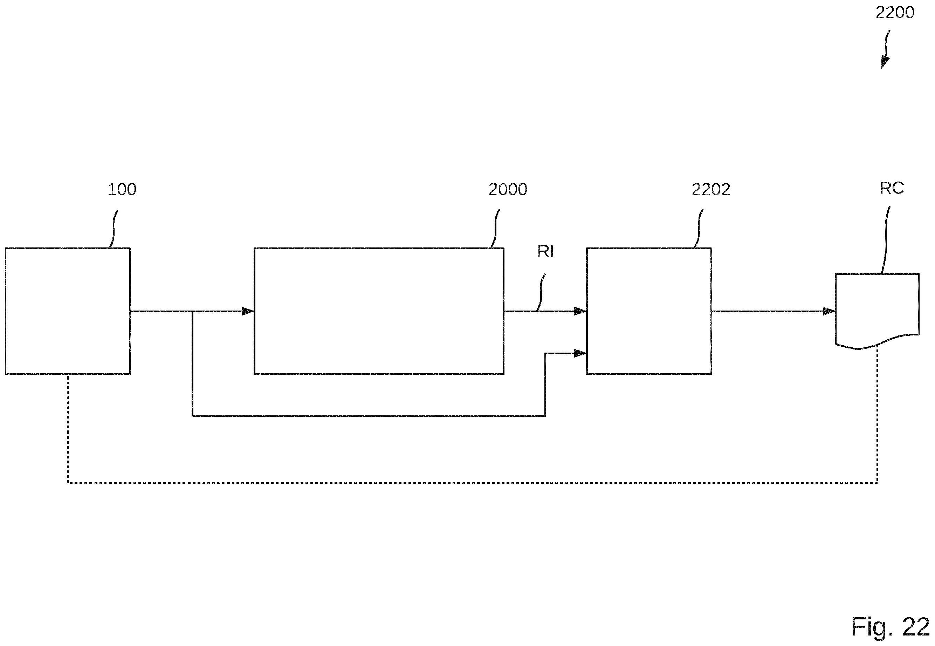

Figure 22 depicts a schematic block diagram for determining a robustness certificate RC. A certificate determination unit 2200 is configured to determine the robustness certificate RC. The certificate determination unit 2200 comprises the robustness indicator unit 2000 according to figure 20.

A determination unit 2202 is configured to determine the robustness certificate RC if the robustness indicator RI indicates the robustness of the trained artificial neural network 100 against adversarial attacks. Run-time parameters like an individual structure, individual activation parameters, individual thresholds, output function parameters, connection parameters, weights, bias values are inputs of the determination unit 2202. If the robustness indicator RI reveals that the examined trained artificial neural network 100 is robust against an adversarial attack, then a hash function of the determination unit 2202 determines a hash value in dependence on the run-time parameters of the trained artificial neural network 100, and provides the resulting hash value as the robustness certificate RC. The hash function of the determination unit 2202 comprises for example a secure hash algorithm like SHA-2 or SHA-3.

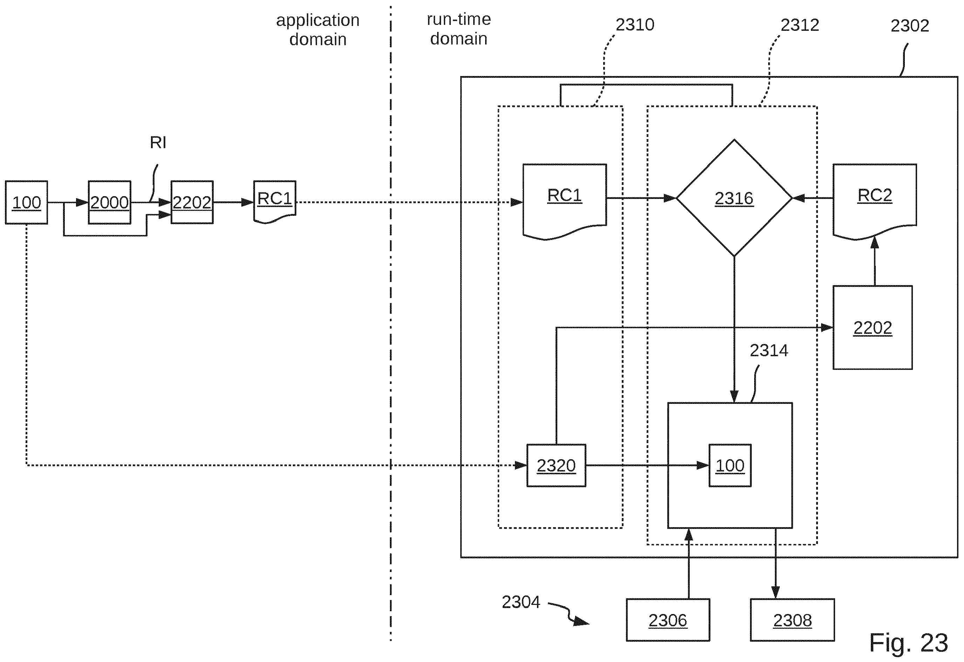

Figure 23 depicts a schematic block diagram of a control unit 2302 to operate a sensor-actuator system 2304. The sensor-actuator system 2304 comprises at least one sensor 2306 and at least one actuator 2308. In examples, the control unit 2302 is configured to operate the partially autonomous robot of figure 13, to operate the manufacturing machine of figure 14, to operate the automated personal assistant of figure 15, to operate the access control system of figure 16, the surveillance system of figure 17, the imaging system of figure 18.

In an application domain a first robustness certificate RC1 is built when the training of the artificial neural network 100 is finished. Before delivery, the first robustness certificate and run-time parameters 2320 of the trained neural network 100 are stored on a hardware security unit 2310.

The hardware security unit 2310 is configured to store the first robustness certificate RC1 and the run-time parameters 2320 of the trained artificial neural network 100. The hardware security unit 2310 protects the stored data from unintentional and intentional manipulation by blocking write access and provides to establish a safe run-time environment in the run-time domain.

The certificate determination unit 2200 according to figure 22 is configured to determine a second robustness certificate RC2 in dependence on the run-time parameters of the trained artificial neural network 100.

A processing unit 2314 of an execution unit 2312 is configured to determine input data for the trained neural network 100 in dependence on at least one sensor reading of the at least one sensor 2306, to compare the first and second robustness certificates RC1, RC2 with each other, and to execute the trained neural network 100 by propagating the input data for the trained neural network 100 through the trained artificial neural network 100 and/or to operate the at least one actuator 2308 based on an output of the trained artificial neural network 100 only if a comparison unit 2316 indicates that the first and second robustness certificates RC1, RC2 match.

Therefore, the robustness certificate RC1 is issued if the trained artificial neural network 100 is robust for all training data. The robustness certificate RC1 is used to control the sensor-actuator system 2304 depending on both the output of the trained artificial neural network 100 and the issued robustness certificate RC1.

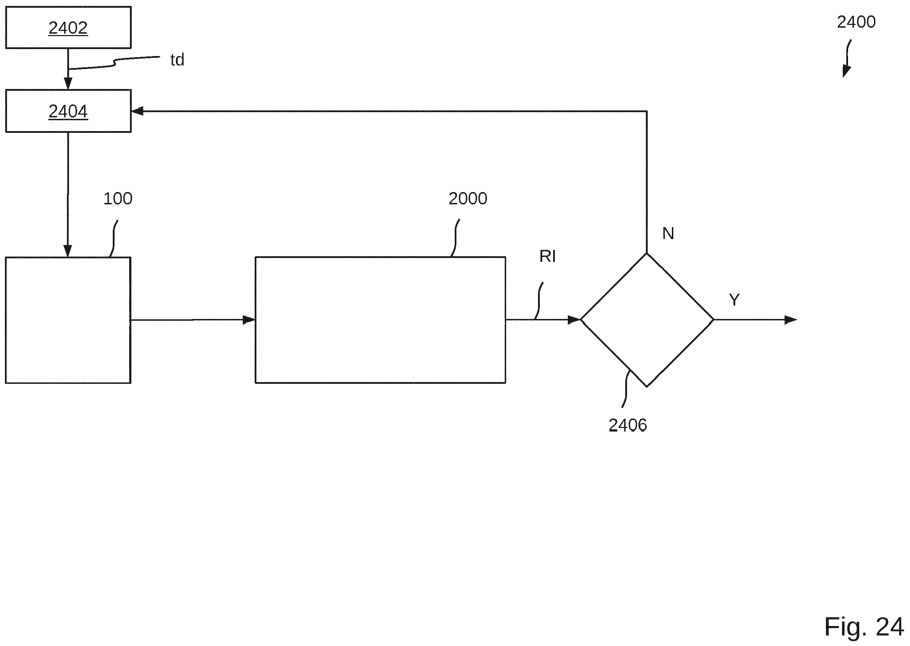

Figure 24 depicts a schematic block diagram for training an artificial neural network. A training unit 2400 is configured to train an artificial neural network 100. A provisioning unit 2402 is configured to provide training data td for the artificial neural network 100. A training unit 2404 is configured to train the artificial neural network 100 in training iterations according to a loop which is started in step 602 of figure 6. The robustness indicator unit 2000 replaces step 605 of figure 6 to determine the robustness. According to a further example, the robustness indicator unit 2000 is placed after the execution of each loop to stop the execution if a decision unit 2406 indicates that a sufficient robustness level of the trained network is achieved.

The robustness indicator unit 2000 according to figure 20 is configured to stop the training via the training unit 2404 after one of the training iterations if the robustness indicator RI indicates the robustness of the trained artificial neural network 100 against adversarial attacks. In another example, the robustness indicator 2000 according to figure 20 is configured to quickly determine the robustness of the trained neural network 100 after the loop over all training data is finished, cf. step 605 of figure 6.

**Claims**

1. A robustness indicator unit (2000) for determining a robustness indicator (RI) for a trained artificial neural network (100), the robustness indicator (RI) indicating a robustness of the trained artificial neural network (510) against adversarial attacks, the robustness indicator unit (2000) comprising:

   a first provisioning unit (2002) being configured to determine or provide first input data (x) for the trained artificial neural network (100);
   a second provisioning unit (2012) being configured to determine or provide perturbation data ($\varepsilon$) for the first input data (x);
   a first determination unit (2004) being configured to determine upper and lower bounds (b) of activation functions of the trained artificial neural network (100) by propagating input data, which is dependent on the first input data (x) and the perturbation data ($\varepsilon$), through the trained artificial neural network (100);
   a second determination unit (2006) being configured to determine a dual artificial neural network (510) in dependence on the trained artificial neural network (100), wherein, in the dual artificial neural network (510), an output layer originating from the trained artificial neural network (100) is reconfigured as an input layer, wherein, in the dual artificial network (510), the input layer originating from the trained artificial neural network (100) is reconfigured as an output layer, wherein activation functions of the dual artificial network (510) are determined in dependence on the determined upper and lower bounds (b);
   a third provisioning unit (2008) being configured to determine or provide second input data (cfast) for the dual artificial neural network (510), in particular in dependence on one predetermined class (y*) of the output layer of the trained artificial neural network (100), wherein the second input data (cfast) is a dense tensor;
   a second determination unit (2010) being configured to determine output data (v) of the dual artificial network (510) by propagating the second input data (cfast) through the dual artificial neural network (510); and
   a third determination unit (2014) being configured to determine the robustness indicator (RI) for the trained artificial neural network (100) in dependence on the first input data (x), in dependence on the perturbation data ($\varepsilon$), and in dependence on the output data (v) of the dual artificial neural network (510).

2. The robustness indicator unit (2000), wherein the second input data (cfast) for the dual artificial neural network (510) comprises only non-zero values, namely a plurality of negative values, in particular-1's, and one single positive value, in particular a 1, for the true classification.

3. A certificate determination unit (2200) for determining a robustness certificate (RC), the certificate determination unit (2200) comprising the robustness indicator unit (2000) according to claim 1 or 2, wherein the certificate determination unit (2200) further comprises:
   a determination unit (2202) being configured to determine the robustness certificate (RC) if the robustness indicator (RI) indicates the robustness of the trained artificial neural network (100) against adversarial attacks.

4. A training unit (2400) to train an artificial neural network (100), wherein the training unit (2400) comprises:

a provisioning unit (2402) being configured to provide training data (td) for the artificial neural network (100);
a training unit (2404) being configured to train the artificial neural network (100) in training iterations; and
the robustness indicator unit (2000) according to claim 1 or 2, which is configured to stop the training via the training unit (2404) after one of the training iterations if the robustness indicator (RI) indicates the robustness of the trained artificial neural network (100) against adversarial attacks.

5. A control unit (2302) to operate a sensor-actuator system (2304), wherein the sensor-actuator system (2304) comprises at least one sensor (2306) and at least one actuator (2308), the control unit (2302) comprising:

a hardware security unit (2310) being configured to store a first robustness certificate (RC1) and run-time parameters (2320) of the trained artificial neural network (100);
the certificate determination unit (2200) according to claim 3 being configured to determine a second robustness certificate (RC2) in dependence on the run-time parameters of the trained artificial neural network (100); and
an execution unit (2312) being configured

- to determine input data for the trained neural network (100) in dependence on at least one sensor reading of the at least one sensor (2306),
- to compare the first and second robustness certificates (RC1, RC2) with each other, and
- to execute the trained neural network (100) by propagating the input data for the trained neural network (100) through the trained artificial neural network (100) and/or to operate the at least one actuator (2308) based on an output of the trained artificial neural network (100) only if the first and second robustness certificates (RC1, RC2) match.

6. A computer-implemented method for determining a robustness indicator (RI) for a trained artificial neural network (100), the robustness indicator (RI) indicating a robustness of the trained artificial neural network (100) against adversarial attacks, the method comprising:

determine or provide (2102) first input data (x) for the trained artificial neural network (100);
determine or provide (2104) perturbation data ($\varepsilon$) for the first input data (x);
determine (2106) upper and lower bounds (b) of activation functions of the trained artificial neural network (100) by propagating input data, which is dependent on the first input data (x) and the perturbation data ($\varepsilon$), through the trained artificial neural network (100);
determine (2108) a dual artificial neural network (510) in dependence on the trained artificial neural network (100), wherein, in the dual artificial neural network (510), an output layer originating from the trained artificial neural network (100) is re-configured as an input layer, wherein, in the dual artificial network (510), the input layer originating from the trained artificial neural network (100) is re-configured as an output layer, wherein activation functions of the dual artificial network (510) are determined in dependence on the determined upper and lower bounds (b);
determine or provide (2110) second input data (cfast) for the dual artificial neural network (510), in particular in dependence on one predetermined class (y*) of the output layer of the trained artificial neural network (100), wherein the second input data (cfast) is a dense tensor;
determine (2112) output data (v) of the dual artificial neural network (510) by propagating the second input data (cfast) through the dual artificial neural network (510); and
determine (2114) the robustness indicator (RI) for the trained artificial neural network (100) in dependence on the first input data (x), in dependence on the perturbation data ($\varepsilon$), and in dependence on the output data (v) of the dual artificial neural network (510).

7. The method according to claim 6, wherein the second input data (cfast) for the dual artificial neural network (510) comprises only non-zero values, namely a plurality of negative values, in particular-1's, and one single positive value, in particular a 1, for the true classification.

8. A method according to claim 6 or 7, wherein the method further comprises:
determine a robustness certificate (RC) if the robustness indicator (RI) indicates the robustness of the trained artificial neural network (100) against adversarial attacks.

9. The method according to one of claims 6 to 8, wherein the method comprises:

provide training data (td) for the artificial neural network (100);

train the artificial neural network (100) in training iterations; and
stop the training after one of the training iterations if the robustness indicator (RI) indicates the robustness of the trained artificial neural network (100) against adversarial attacks.

10. A method to operate a sensor-actuator system (2304), wherein the sensor-actuator system (2304) comprises at least one sensor (2306) and at least one actuator (2308), the method comprising:

store a first robustness certificate (RC1) and run-time parameters (2320) of the trained artificial neural network (100);
determine a second robustness certificate (RC2) in dependence on the run-time parameters of the trained artificial neural network (100) via the method according to claim 8;
determine input data for the trained neural network (100) in dependence on at least one sensor reading of the at least one sensor (2306),
compare the first and second robustness certificates (RC1, RC2) with each other; and
execute the trained neural network (100) by propagating the input data for the trained neural network (100) through the trained artificial neural network (100) and/or to operate the at least one actuator (2308) based on an output of the trained artificial neural network (100) only if the first and second robustness certificates (RC1, RC2) match.

**Amended claims in accordance with Rule 137(2) EPC.**

1. A robustness indicator unit (2000) for determining a robustness indicator (RI) for a trained artificial neural network (100), the robustness indicator (RI) indicating a robustness of the trained artificial neural network (510) against adversarial attacks, the robustness indicator unit (2000) comprising:

a first provisioning unit (2002) being configured to determine first input data (x) for the trained artificial neural network (100);
a second provisioning unit (2012) being configured to determine perturbation data ($\varepsilon$) for the first input data (x);
a first determination unit (2004) being configured to determine upper and lower bounds (b) of activation functions of the trained artificial neural network (100) by propagating input data, which is dependent on the first input data (x) and the perturbation data ($\varepsilon$), through the trained artificial neural network (100);
a second determination unit (2006) being configured to determine a dual artificial neural network (510) in dependence on the trained artificial neural network (100), wherein, in the dual artificial neural network (510), an output layer originating from the trained artificial neural network (100) is re-configured as an input layer, wherein, in the dual artificial network (510), the input layer originating from the trained artificial neural network (100) is re-configured as an output layer, wherein activation functions of the dual artificial network (510) are determined in dependence on the determined upper and lower bounds (b);
a third provisioning unit (2008) being configured to determine second input data (cfast) for the dual artificial neural network (510), in particular in dependence on one predetermined class (y*) of the output layer of the trained artificial neural network (100), wherein the second input data (cfast) is a dense tensor;
a second determination unit (2010) being configured to determine output data (v) of the dual artificial neural network (510) by propagating the second input data (cfast) through the dual artificial neural network (510); and
a third determination unit (2014) being configured to determine the robustness indicator (RI) for the trained artificial neural network (100) in dependence on the first input data (x), in dependence on the perturbation data ($\varepsilon$), and in dependence on the output data (v) of the dual artificial neural network (510).

2. The robustness indicator unit (2000), wherein the second input data (cfast) for the dual artificial neural network (510) comprises only non-zero values, namely a plurality of negative values, in particular -1's, and one single positive value, in particular a 1, for the true classification.

3. A certificate determination unit (2200) for determining a robustness certificate (RC), the certificate determination unit (2200) comprising the robustness indicator unit (2000) according to claim 1 or 2, wherein the certificate determination unit (2200) further comprises:
a determination unit (2202) being configured to determine the robustness certificate (RC) if the robustness indicator (RI) indicates the robustness of the trained artificial neural network (100) against adversarial attacks.

4. A training unit (2400) to train an artificial neural network (100), wherein the training unit (2400) comprises:

a provisioning unit (2402) being configured to provide training data (td) for the artificial neural network (100);
a training unit (2404) being configured to train the artificial neural network (100) in training iterations; and
the robustness indicator unit (2000) according to claim 1 or 2, which is configured to stop the training via the training unit (2404) after one of the training iterations if the robustness indicator (RI) indicates the robustness of the trained artificial neural network (100) against adversarial attacks.

5. A control unit (2302) to operate a sensor-actuator system (2304), wherein the sensor-actuator system (2304) comprises at least one sensor (2306) and at least one actuator (2308), the control unit (2302) comprising:

a hardware security unit (2310) being configured to store a first robustness certificate (RC1) and run-time parameters (2320) of the trained artificial neural network (100);
the certificate determination unit (2200) according to claim 3 being configured to determine a second robustness certificate (RC2) in dependence on the run-time parameters of the trained artificial neural network (100); and
an execution unit (2312) being configured

- to determine input data for the trained neural network (100) in dependence on at least one sensor reading of the at least one sensor (2306),
- to compare the first and second robustness certificates (RC1, RC2) with each other, and
- to execute the trained neural network (100) by propagating the input data for the trained neural network (100) through the trained artificial neural network (100) and/or to operate the at least one actuator (2308) based on an output of the trained artificial neural network (100) only if the first and second robustness certificates (RC1, RC2) match.

6. A computer-implemented method for determining a robustness indicator (RI) for a trained artificial neural network (100), the robustness indicator (RI) indicating a robustness of the trained artificial neural network (100) against adversarial attacks, the method comprising:

determine (2102) first input data (x) for the trained artificial neural network (100);
determine (2104) perturbation data ($\varepsilon$) for the first input data (x);
determine (2106) upper and lower bounds (b) of activation functions of the trained artificial neural network (100) by propagating input data, which is dependent on the first input data (x) and the perturbation data ($\varepsilon$), through the trained artificial neural network (100);
determine (2108) a dual artificial neural network (510) in dependence on the trained artificial neural network (100), wherein, in the dual artificial neural network (510), an output layer originating from the trained artificial neural network (100) is re-configured as an input layer, wherein, in the dual artificial network (510), the input layer originating from the trained artificial neural network (100) is re-configured as an output layer, wherein activation functions of the dual artificial network (510) are determined in dependence on the determined upper and lower bounds (b);
determine (2110) second input data (cfast) for the dual artificial neural network (510), in particular in dependence on one predetermined class (y*) of the output layer of the trained artificial neural network (100), wherein the second input data (cfast) is a dense tensor;
determine (2112) output data (v) of the dual artificial neural network (510) by propagating the second input data (cfast) through the dual artificial neural network (510); and
determine (2114) the robustness indicator (RI) for the trained artificial neural network (100) in dependence on the first input data (x), in dependence on the perturbation data ($\varepsilon$), and in dependence on the output data (v) of the dual artificial neural network (510).

7. The method according to claim 6, wherein the second input data (cfast) for the dual artificial neural network (510) comprises only non-zero values, namely a plurality of negative values, in particular -1's, and one single positive value, in particular a 1, for the true classification.

8. A method according to claim 6 or 7, wherein the method further comprises:
determine a robustness certificate (RC) if the robustness indicator (RI) indicates the robustness of the trained artificial neural network (100) against adversarial attacks.

9. The method according to one of claims 6 to 8, wherein the method comprises:

provide training data (td) for the artificial neural network (100);

train the artificial neural network (100) in training iterations; and

stop the training after one of the training iterations if the robustness indicator (RI) indicates the robustness of the trained artificial neural network (100) against adversarial attacks.

10. A method to operate a sensor-actuator system (2304), wherein the sensor-actuator system (2304) comprises at least one sensor (2306) and at least one actuator (2308), the method comprising:

store a first robustness certificate (RC1) and run-time parameters (2320) of the trained artificial neural network (100);

determine a second robustness certificate (RC2) in dependence on the run-time parameters of the trained artificial neural network (100) via the method according to claim 8;

determine input data for the trained neural network (100) in dependence on at least one sensor reading of the at least one sensor (2306),

compare the first and second robustness certificates (RC1, RC2) with each other; and

execute the trained neural network (100) by propagating the input data for the trained neural network (100) through the trained artificial neural network (100) and/or to operate the at least one actuator (2308) based on an output of the trained artificial neural network (100) only if the first and second robustness certificates (RC1, RC2) match.

Fig. 1

Fig. 2

```
┌─────────┐
│   301   │
└─────────┘
     │
     ▼
┌─────────┐
│   302   │
└─────────┘
     │
     ▼
┌─────────┐
│   303   │
└─────────┘
     │
     ▼
┌─────────┐
│   304   │
└─────────┘
     │
     ▼
┌─────────┐
│   305   │
└─────────┘
     │
     ▼
┌─────────┐
│   306   │
└─────────┘
```

**Fig. 3**

EP 3 754 557 A1

**Fig. 4**

EP 3 754 557 A1

**Fig. 5**

Fig. 6

700

```
┌─────────┐
│   701   │
└─────────┘
     │
     ▼
┌─────────┐
│   702   │
└─────────┘
     │
     ▼
┌─────────┐
│   703   │
└─────────┘
     │
     ▼
┌─────────┐
│   704   │◄──┐
└─────────┘   │
     │        │
     ▼        │
┌─────────┐   │
│   705   │───┘
└─────────┘
     │
     ▼
┌─────────┐
│   706   │
└─────────┘
```

**Fig. 7**

800

```
┌─────────┐
│   801   │
└─────────┘
     │
     ▼
┌─────────┐
│   802   │
└─────────┘
     │
     ▼
┌─────────┐
│   803   │
└─────────┘
     │
     ▼
┌─────────┐
│   804   │
└─────────┘
```

**Fig. 8**

```
┌─────────┐
│   901   │
└─────────┘
     │
     ▼
┌─────────┐
│   902   │
└─────────┘
     │
     ▼
┌─────────┐
│   903   │
└─────────┘
     │
     ▼
┌─────────┐
│   904   │
└─────────┘
     │
     ▼
┌─────────┐
│   905   │
└─────────┘
     │
     ▼
┌─────────┐
│   906   │
└─────────┘
```

**Fig. 9**

1000

```
┌──────────┐
│   1001   │
└──────────┘
     │
     ▼
┌──────────┐
│   1002   │
└──────────┘
     │
     ▼
┌──────────┐
│   1003   │
└──────────┘
     │
     ▼
┌──────────┐
│   1004   │
└──────────┘
     │
     ▼
┌──────────┐
│   1005   │
└──────────┘
     │
     ▼
┌──────────┐
│   1006   │
└──────────┘
```

**Fig. 10**

EP 3 754 557 A1

1100

```
┌──────────┐
│   1101   │
└──────────┘
      │
      ▼
┌──────────┐
│   1102   │
└──────────┘
      │
      ▼
┌──────────┐
│   1103   │
└──────────┘
      │
      ▼
┌──────────┐
│   1104   │
└──────────┘
      │
      ▼
┌──────────┐
│   1105   │
└──────────┘
      │
      ▼
┌──────────┐
│   1106   │
└──────────┘
```

**Fig. 11**

**Fig. 12**

EP 3 754 557 A1

**Fig. 13**

EP 3 754 557 A1

Fig. 14

Fig. 15

**Fig. 16**

EP 3 754 557 A1

1240

1210a

1230

1701

**Fig. 17**

**Fig. 18**

**Fig. 19**

EP 3 754 557 A1

Fig. 20

```
┌──────────────────────────────────────┐
│                                      │─── 2102
└──────────────────────────────────────┘
                    │
                    ▼
┌──────────────────────────────────────┐
│                                      │─── 2104
└──────────────────────────────────────┘
                    │
                    ▼
┌──────────────────────────────────────┐
│                                      │─── 2106
└──────────────────────────────────────┘
                    │
                    ▼
┌──────────────────────────────────────┐
│                                      │─── 2108
└──────────────────────────────────────┘
                    │
                    ▼
┌──────────────────────────────────────┐
│                                      │─── 2110
└──────────────────────────────────────┘
                    │
                    ▼
┌──────────────────────────────────────┐
│                                      │─── 2112
└──────────────────────────────────────┘
                    │
                    ▼
┌──────────────────────────────────────┐
│                                      │─── 2114
└──────────────────────────────────────┘
```

Fig. 21

Fig. 22

Fig. 23

Fig. 24

Europäisches
Patentamt

European
Patent Office

Office européen
des brevets

**EUROPEAN SEARCH REPORT**

Application Number

EP 19 18 1201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ERIC WONG ET AL: "Provable defenses against adversarial examples via the convex outer adversarial polytope", ARXIV.ORG, CORNELL UNIVERSITY LIBRARY, 201 OLIN LIBRARY CORNELL UNIVERSITY ITHACA, NY 14853, 2 November 2017 (2017-11-02), XP081325600, | 1-4,6-9 | INV. G06N3/04 ADD. G06N3/08 |
| A | * page 1 - page 8 * <br> * page 11 - page 19 * | 5,10 | |
| A | HUAN ZHANG ET AL: "Efficient Neural Network Robustness Certification with General Activation Functions", ARXIV.ORG, CORNELL UNIVERSITY LIBRARY, 201 OLIN LIBRARY CORNELL UNIVERSITY ITHACA, NY 14853, 2 November 2018 (2018-11-02), XP081045275, * page 1 - page 8 * <br> * APPENDICES C-E * | 1-10 | |
| A | KE SUN ET AL: "Enhancing the Robustness of Deep Neural Networks by Boundary Conditional GAN", ARXIV.ORG, CORNELL UNIVERSITY LIBRARY, 201 OLIN LIBRARY CORNELL UNIVERSITY ITHACA, NY 14853, 28 February 2019 (2019-02-28), XP081034787, * page 1 - page 7, left-hand column, paragraph 2 * | 1-10 | TECHNICAL FIELDS SEARCHED (IPC) <br><br> G06N |

-/--

The present search report has been drawn up for all claims

| Place of search | Date of completion of the search | Examiner |
|---|---|---|
| The Hague | 12 December 2019 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 18 1201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ADITI RAGHUNATHAN ET AL: "Certified Defenses against Adversarial Examples", ARXIV.ORG, CORNELL UNIVERSITY LIBRARY, 201 OLIN LIBRARY CORNELL UNIVERSITY ITHACA, NY 14853, 29 January 2018 (2018-01-29), XP081210600, * page 1 - page 11 * * APPENDIX A * | 1-10 | |
| A | NICOLAS PAPERNOT ET AL: "Distillation as a Defense to Adversarial Perturbations Against Deep Neural Networks", 2016 IEEE SYMPOSIUM ON SECURITY AND PRIVACY (SP), 1 May 2016 (2016-05-01), pages 582-597, XP055569149, DOI: 10.1109/SP.2016.41 ISBN: 978-1-5090-0824-7 * page 1 - page 15 * | 1-10 | |

TECHNICAL FIELDS
SEARCHED (IPC)

The present search report has been drawn up for all claims

| Place of search | Date of completion of the search | Examiner |
|---|---|---|
| The Hague | 12 December 2019 | Volkmer, Markus |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WONG.** *Provable Defenses against Adversarial Examples via the Convex Outer Adversarial Polytope*

- **METZEN et al.** Universal adversarial perturbations against semantic image segmentation. *The IEEE International Conference on Computer Vision (ICCV),* 2017